# EUROPEAN PATENT APPLICATION

(11) **EP 4 582 463 A1**
(43) Date of publication of application: **09.07.2025**
(21) Application number: 23860374.0
(22) Date of filing: 29.08.2023
(51) Int. Cl.: C08G 59/24, C08G 59/40, C08G 59/50, C08G 59/66, C08G 59/68

(54) **CURABLE COMPOSITION, CURED PRODUCT, AND METHOD FOR PRODUCING CURED PRODUCT**

(30) Priority: 31.08.2022 JP 2022138414; 31.08.2022 JP 2022138424
(71) Applicant: Kureha Corporation, Chuo-ku Tokyo 103-8552 (JP); Resinous Kasei Co., Ltd., Tokyo 103-0012 (JP); Kureha Trading Co., Ltd., Tokyo 103-0012 (JP)
(72) Inventor: KUDO, Takahiro, Tokyo 103-8552 (JP); NANZAI, Yuichi, Tokyo 103-8552 (JP); SATO, Takeshi, Tokyo 103-8552 (JP); ARAI, Keizo, Tokyo 103-0012 (JP); ITO, Masaki, Tokyo 103-0012 (JP)
(74) Representative: Zimmermann & Partner Patentanwälte mbB
(86) International application number: PCT/JP2023/031333
(87) International publication number: WO 2024/048612

(57) **Abstract**

A curable composition contains an alicyclic epoxy resin (A) and an active hydrogen compound (B1) having a pKa of 10 or less.

## Description

### TECHNICAL FIELD

The present invention relates to a curable composition, a cured product, and a method for producing a cured product.

### BACKGROUND ART

Epoxy resins are used in various electric and electronic components. Among them, alicyclic epoxy resins are used in, for example, optical applications such as sealing materials and surface protective films for optical semiconductor elements and organic electroluminescent elements because of their low viscosity, and high transparency and weather resistance of their cured products.

On the other hand, alicyclic epoxy resins have much lower reactivity than that of general-purpose epoxy resins such as bisphenol-type epoxy resins. Thus, in active hydrogen compounds such as amines, curing reaction does not proceed, or curing takes a long time. Accordingly, studies have been made to facilitate the progress of the curing reaction of an alicyclic epoxy resin by using an acid anhydride-based curing agent or devising the structure of the epoxy resin (first study).

For example, Patent Document 1 discloses a curable composition containing an alicyclic epoxy resin having a specific structure and an active hydrogen compound. As the active hydrogen compound, an aliphatic amine-based curing agent is used. According to the document, when an alicyclic epoxy resin having a specific structure is used, curing can be performed even in an active hydrogen compound.

Patent Document 2 discloses a curable composition containing an alicyclic epoxy resin, a polyfunctional thiol, a curing agent, and a curing accelerator. An aliphatic thiol is used as the polyfunctional thiol, an acid anhydride is used as the curing agent, and DBU p-toluenesulfonate salt is used as the curing accelerator.

Patent Document 3 discloses a curable composition containing diglycidyl hexahydrophthalate, an alicyclic epoxy resin, a polythiol-based curing agent, and a curing accelerator.

The epoxy resin is a thermosetting resin that is to be cured by reacting with a curing agent. Most thermosetting resins are usually in a liquid state before curing. Thus, the thermosetting resin has advantages that adhesion to an adherend is high to easily improve an adhesive force, that it is possible to ensure fluidity in a liquid state, and thus the amount of a filler added is increased as compared with a thermoplastic resin, that the filler can be highly dispersed, and the like.

The thermoplastic resin can be recycled by being melted again. On the other hand, the thermosetting resin does not melt once it is cured, and thus cannot be recycled. That is, it is difficult to peel off the cured product of the thermosetting resin after it is adhered to the adherend. Accordingly, it has been studied to impart thermoplasticity to the cured product of a thermosetting resin such as an epoxy resin (second study).

For example, Patent Document 4 discloses a composition containing a bifunctional aromatic epoxy resin (A), a bifunctional phenol compound (B), and a reinforcing fiber. Patent Document 5 discloses an adhesive containing a bifunctional aromatic epoxy resin, a bifunctional curing agent, and a curing catalyst. Patent Document 6 discloses an epoxy resin composition containing a bifunctional aromatic epoxy resin and at least one of a bifunctional amine-based compound, a bifunctional phenol-based compound, or a bifunctional thiol-based compound. It is described that any of these compositions is cured to obtain a resin having thermoplasticity, in which a bifunctional aromatic epoxy resin and a bifunctional curing agent are linearly polymerized.

### CITATION LIST

### PATENT DOCUMENT

Patent Document 1: JP 2021-55001 A
Patent Document 2: JP 2010-53199 A
Patent Document 3: JP 2007-109915 A
Patent Document 4: JP 2006-321897 A
Patent Document 5: JP 2019-194322 A
Patent Document 6: JP 2001-348419 A

### SUMMARY OF INVENTION

### TECHNICAL PROBLEM

However, regarding the first study (curing reactivity of an alicyclic epoxy resin), in Patent Document 1, it is necessary to use an alicyclic epoxy resin having a specific structure. It is desired that a variety of alicyclic epoxy resins can be used without being limited to such a particular structure.

The curable composition of Patent Document 2 contains a large amount of an acid anhydride-based curing agent, and thus, although the curing reaction proceeds, it takes a long time to obtain a cured product. The curable composition of Patent Document 3 contains a large amount of an aromatic epoxy resin, and thus, the curing reaction relatively easily proceeds. However, in a case where the curable composition contains a large amount of an alicyclic epoxy resin, it takes a long time to obtain a cured product.

Accordingly, it is desired to facilitate the progress of the curing reaction and shorten the time required to obtain a cured product even when the alicyclic epoxy resin is contained in a large amount.

Regarding the second study (impartment of thermoplasticity to an epoxy resin), the epoxy resin contained in each of the compositions described in Patent Documents 4 to 6 is an aromatic epoxy resin, and thus, in a case where the composition is cured, not only a reaction between the aromatic epoxy resin and the curing agent but also a reaction of the aromatic epoxy resin of itself is likely to occur. Accordingly, a part of the aromatic epoxy resin is easily crosslinked, and the obtained cured product is less likely to be a highly linearly polymerized polymer, and does not have sufficient thermoplasticity.

For the reaction of a bifunctional resin and curing agent, it is necessary to blend the resin and the curing agent in equivalent amounts. Thus, in a case where the curing agent is solid, there is a problem that, when blending the resin and the curing agent, the obtained mixture is likely to thicken. In particular, in a case of an aromatic epoxy resin having a high viscosity, the viscosity becomes extremely high, and thus, the liquid property peculiar to a thermosetting resin is likely to be lost. In addition, in the aromatic epoxy resin having a high viscosity, there is a problem in that the impregnation ability into an adherend or a filler is low and it is difficult to increase the content of the filler to suppress an increase in the viscosity. Further, in a case where an aromatic epoxy resin is used, when a primary amine is used as the bifunctional curing agent, a linearly polymerized polymer cannot be obtained due to three-dimensional crosslinking.

When a cured product has sufficient thermoplasticity, the cured product can be re-melted, and thus can be recycled or self-repaired. For example, when a cured product adhering to an adherend can be softened or melted by heating, the cured product can be peeled off from the adherend, which can impart easy disassemblability.

In addition, when a composition before curing is in a liquid state, for example, shear kneading such as three-roll dispersion is possible, and thus it is possible to highly disperse a filler. For example, when a cured product obtained by dispersing a composition containing a filler by shear kneading and then curing the composition can be melted, a filler which is difficult to disperse in an extruder for a thermoplastic resin can be added in a dispersed state as a master batch. Thus, it is further desired that a cured product having thermoplasticity can be provided while having good workability similar to that of a thermosetting resin.

The present invention has been made in view of the above circumstances, and is directed to providing a curable composition which exhibits good curing reactivity even when containing a large amount of an alicyclic epoxy resin, a cured product, and a method for producing a cured product. Preferably, the present invention is further directed to providing a curable composition and a thermoplastic resin capable of providing a cured product having thermoplasticity while having good workability similar to that of a thermosetting resin.

### SOLUTION TO PROBLEM

The present invention relates to a curable composition, a cured product, a method for producing a cured product, and a thermoplastic resin described below.
[1] A curable composition containing: an alicyclic epoxy resin (A); and an active hydrogen compound (B1) having a pKa of 10 or less.
[2] The curable composition according to [1], in which the active hydrogen compound (B1) contains an aromatic thiol-based compound.
[3] The curable composition according to [1] or [2], in which the alicyclic epoxy resin (A) is a bifunctional alicyclic epoxy resin (A'), and the active hydrogen compound (B1) having a pKa of 10 or less is a bifunctional active hydrogen compound (B1') having a pKa of 10 or less.
[4] A curable composition containing: an alicyclic epoxy resin (A); an active hydrogen compound (B2) having a pKa of more than 10; and a cationic catalyst (C1), in which a content ratio of the active hydrogen compound (B2) to 100 parts by mass of the alicyclic epoxy resin (A) is from 40 to 200 (mass ratio).
[5] The curable composition according to [4], in which the active hydrogen compound (B2) includes an aliphatic thiol-based compound.
[6] A curable composition containing: a bifunctional alicyclic epoxy resin (A'); a bifunctional active hydrogen compound (B2') having a pKa of more than 10; and a cationic catalyst (C1).
[7] A curable composition containing: an alicyclic epoxy resin (A); an active hydrogen compound (B2) having a pKa of more than 10; and a catalyst (C2) that generates a cation by reaction with the active hydrogen compound (B2) or by light irradiation.
[8] The curable composition according to [7], in which the active hydrogen compound (B2) includes an aliphatic thiol-based compound.
[9] The curable composition according to [7] or [8], in which the catalyst (C2) is a catalyst that generates a cation by reaction with the active hydrogen compound (B2) and contains dicyandiamide.
[10] The curable composition according to any one of [7] to [9], in which the alicyclic epoxy resin (A) is a bifunctional alicyclic epoxy resin (A'), and the active hydrogen compound (B2) having a pKa of more than 10 is a bifunctional active hydrogen compound (B2') having a pKa of more than 10.
[11] A cured product of the curable composition described in any one of [1] to [10].
[12] A method for producing a cured product, the method including: reacting an active hydrogen compound (B2) with dicyandiamide under heating to obtain a composition containing guanidine; and reacting the composition with an alicyclic epoxy resin (A) under heating to obtain a cured product of a curable composition containing the alicyclic epoxy resin (A).
[13] A thermoplastic resin including: a structural unit derived from a bifunctional alicyclic epoxy resin (A'); and a structural unit derived from a bifunctional active hydrogen composition (B').

### ADVANTAGEOUS EFFECTS OF INVENTION

According to the present invention, it is possible to provide a curable composition which exhibits good curing reactivity even when a large amount of an alicyclic epoxy resin is contained, a cured product, and a method for producing a cured product. Preferably, it is possible to further provide a curable composition and a thermoplastic resin capable of providing a cured product having thermoplasticity while having good workability similar to that of a thermosetting resin.

### BRIEF DESCRIPTION OF DRAWINGS

FIGS. 1A and 1B are photographs showing appearance of a cured product obtained from Composition 2-6 before and after heating.
FIGS. 2A and 2B are photographs showing appearance of a cured product obtained from Composition 2-7 before and after heating.
FIG. 3A is a diagram showing a curing reaction mechanism of Composition 2-6, and FIG. 3B is a diagram showing a TOF-MS spectrum of the cured product.
FIG. 4A is an image showing an SEM observation result of a sample sheet surface of Composition 2-6, and FIGS. 4B and 4C are images each showing an EDX result.

### DESCRIPTION OF EMBODIMENTS

As described above, an alicyclic epoxy resin, particularly a bifunctional alicyclic epoxy resin having an epoxy group composed of two adjacent carbon atoms constituting an alicyclic ring and an oxygen atom (hereinafter, also referred to as "alicyclic epoxy group") has lower curing reactivity than that of a general-purpose epoxy resin such as a bisphenol-type epoxy resin.

To enhance the curing reactivity of such an alicyclic epoxy resin having low curing reactivity, it is effective to activate the alicyclic epoxy resin by allowing H⁺ (a cation) to be present in the system.

The present inventors have found that
an alicyclic epoxy resin can be easily activated to enhance the curing reactivity by:
1) using an active hydrogen compound that is likely to release H⁺ (i.e., an active hydrogen compound having a low pKa) as a curing agent;
2) using an active hydrogen compound that is less likely to release H⁺ (i.e., an active hydrogen compound having a high pKa) and a cationic catalyst (C1) in combination as a curing agent; or
3) using an active hydrogen compound having a high pKa and a catalyst (C2) that generates a cation by reaction with the active hydrogen compound or by light irradiation in combination as a curing agent. In particular, the present inventors have found: that a cured product having a high refractive index can be obtained by using a thiol-based compound as the active hydrogen compound; and that a cured product having flexibility and a high bending modulus of elasticity while having a high refractive index can be obtained by using an aliphatic thiol-based compound.

That is, a curable composition according to one embodiment of the present invention contains an alicyclic epoxy resin (A) and, as a component for curing the alicyclic epoxy resin,
1) an active hydrogen compound (B1) having a pKa of 10 or less;
2) a combination of an active hydrogen compound (B2) having a pKa of more than 10 and a cationic catalyst (C1); or
3) a combination of an active hydrogen compound (B2) having a pKa of more than 10 and a catalyst (C2) that generates a cation by reaction or light irradiation.

In addition, the present inventors have found that in the curing system, the bifunctional alicyclic epoxy resin (A') is easily linearly polymerized with the bifunctional active hydrogen compound (B').

That is, in a curing system containing an acid anhydride, the epoxy group of the alicyclic epoxy resin reacts with the acid anhydride and then undergoes ring-opening to form an oxygen anion (-O⁻). Thus, the epoxy group reacts also with another alicyclic epoxy resin (not only with the acid anhydride) to be easily three-dimensionally crosslinked (see below).

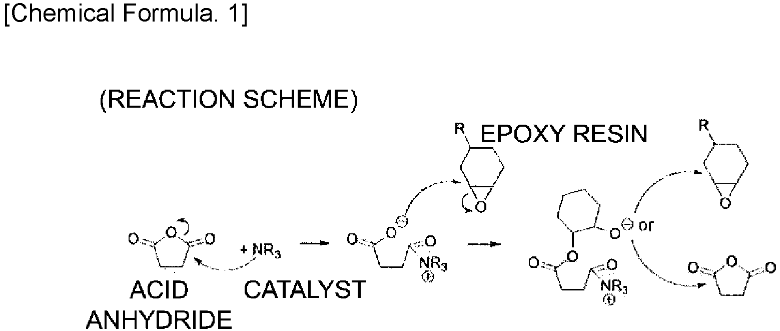

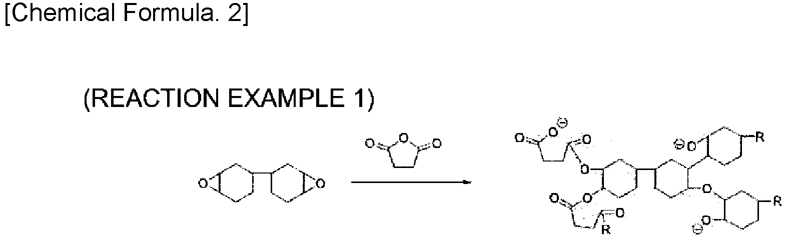

In contrast, in the curing systems of 1) to 3), the epoxy group of the alicyclic epoxy resin reacts with the active hydrogen compound and then forms - OH with the cation (H⁺). Thus, the epoxy group does not react with another alicyclic epoxy resin but reacts only with the active hydrogen compound (see below). That is, the reaction proceeds not via an oxygen anion, and thus the reaction of the alicyclic epoxy resin of itself is less likely to occur. Accordingly, the alicyclic epoxy resin, the active hydrogen compound, the alicyclic epoxy resin, and the like can be linearly bonded in this order without three-dimensional crosslinking. Thereby, a cured product having thermoplasticity can be obtained.

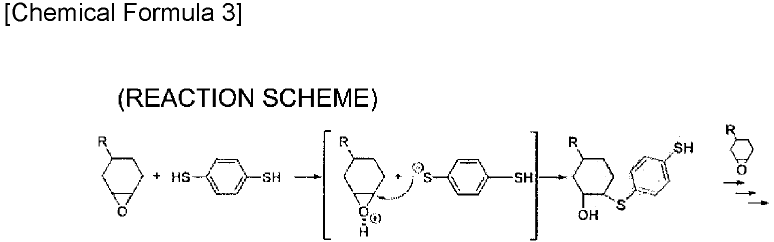

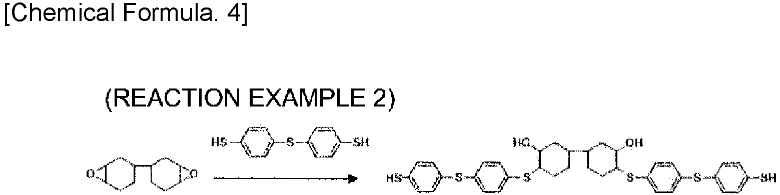

Thus, the curable composition can provide a cured product having thermoplasticity while having good workability equivalent to that of a thermosetting resin. **In** addition, such a cured product having thermoplasticity exhibits a self-repairing ability in which, for example, even if a crack is once generated, the crack disappears by being softened or melted by heating. Accordingly, for example, the cured product adhering to an adherend can be peeled off from the adherend by softening or melting the cured product by heating, and can be recycled.

Hereinafter, the constitution of a curable composition will be described in detail.

### 1. Curable composition

A curable composition according to an embodiment of the present invention includes an alicyclic epoxy resin (A), an active hydrogen compound (B), and an optional curing catalyst (C).

### 1-1. Alicyclic epoxy resin (A)

The alicyclic epoxy resin (A) is a compound having two or more epoxy groups in one molecule, and preferably a compound having an epoxy group composed of two or more adjacent carbon atoms constituting an alicyclic ring and an oxygen atom (hereinafter, also referred to as "alicyclic epoxy group"). As described above, the epoxy group composed of carbon atoms constituting the alicyclic ring and an oxygen atom has low curing reactivity, and thus it is particularly effective to perform curing by the active hydrogen compound (B)/curing catalyst (C) of 1) to 3) above.

The number of epoxy groups contained in one molecule of the alicyclic epoxy resin (A) is not particularly limited, but is preferably 2 or more, and more preferably from 2 to 4. That is, the alicyclic epoxy resin (A) may be a bifunctional alicyclic epoxy resin (A') having two epoxy groups in one molecule, or a trifunctional or higher functional alicyclic epoxy resin having three or more epoxy groups in one molecule.

Examples of the alicyclic epoxy group in the compound having an alicyclic epoxy group include a cyclohexene oxide group and a cyclopentene oxide group. Examples of the compound having an alicyclic epoxy group include compounds represented by the following formula (i).

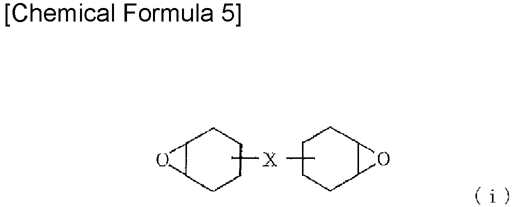

In the formula (i), X represents a single bond or a linking group. Examples of the linking group include a divalent hydrocarbon group, an alkenylene group in which a part or all of carbon-carbon double bonds are epoxidized (hereinafter, also referred to as "epoxidized alkenylene group"), a carbonyl group, an ether bond, an ester bond, a siloxane bond, a carbonate group, an amide group, and a group with a plurality of these groups linked. Not that a substituent (for example, an alkyl group) may be bonded to the cyclohexene oxide group in the formula (i).

Examples of the divalent hydrocarbon group include a linear or branched alkylene group having 1 to 18 carbon atoms and a divalent alicyclic hydrocarbon group.
Examples of the linear or branched alkylene group having 1 to 18 carbon atoms include a methylene group, an methylmethylene group, a dimethylmethylene group, an ethylene group, a propylene group, and a trimethylene group.
Examples of the divalent alicyclic hydrocarbon group include cycloalkylene groups (including cycloalkylidene groups) such as a 1,2-cyclopentylene group, a 1,3-cyclopentylene group, a cyclopentylidene group, a 1,2-cyclohexylene group, a 1,3-cyclohexylene group, a 1,4-cyclohexylene group, and a cyclohexylidene group.

Examples of the alkenylene group in the epoxidized alkenylene group include linear or branched alkenylene groups having 2 to 8 carbon atoms, such as a vinylene group, a propenylene group, a 1-butenylene group, a 2-butenylene group, a butadienylene group, a pentenylene group, a hexenylene group, a heptenylene group, and an octenylene group. The epoxidized alkenylene group is preferably an alkenylene group in which all the carbon-carbon double bonds are epoxidized, and more preferably an alkenylene group having 2 to 4 carbon atoms in which all the carbon-carbon double bonds are epoxidized.

Examples of the compound represented by the formula (i) include (3,4,3',4'-diepoxy)bicyclohexyl, bis(3,4-epoxycyclohexylmethyl)ether, 1,2-epoxy-1,2-bis(3,4-epoxycyclohexan-1-yl)ethane, 2,2-bis(3,4-epoxycyclohexan-1-yl)propane, 1,2-bis(3,4-epoxycyclohexan-1-yl)ethane, and compounds represented by the following formulae (i-1) to (i-9). In the following formulae (i-5) and (i-7), I and m each represent an integer of 1 to 30. R' in the following formula (i-5) is an alkylene group having 1 to 8 carbon atoms, and among them, a linear or branched alkylene group having 1 to 3 carbon atoms such as a methylene group, an ethylene group, a propylene group, or an isopropylene group is preferable.

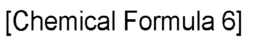

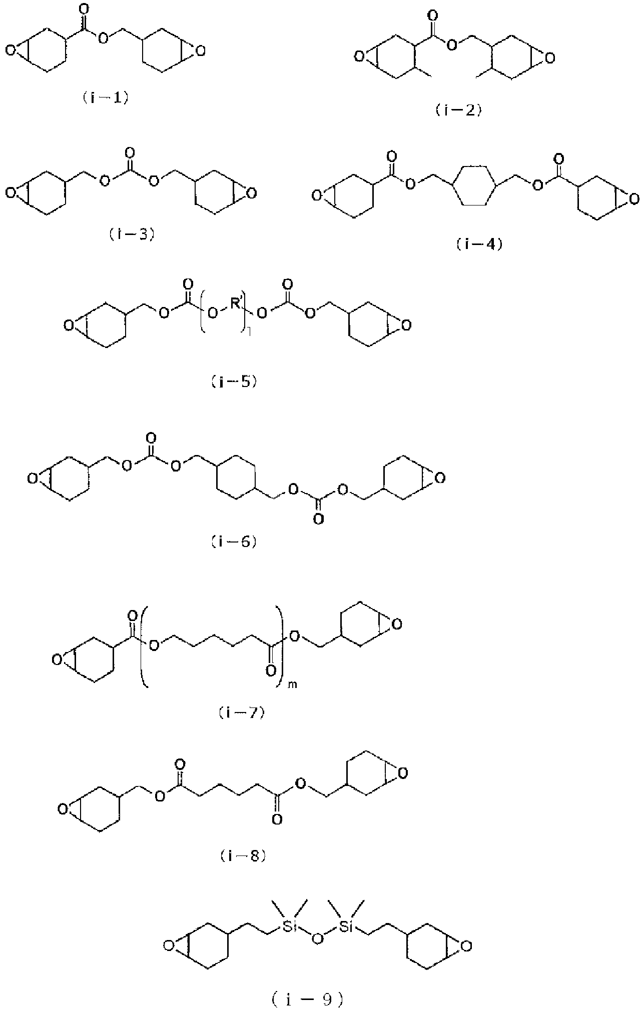

Examples of the compound having an alicyclic epoxy group include the following compounds in addition to the compound represented by the above formula (i).

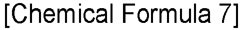

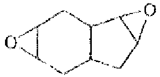

Examples of the compound having an alicyclic epoxy group also include compounds having three or more alicyclic epoxy groups in the molecule as represented by the following formulae (ii-1) to (ii-3) and compounds having one alicyclic epoxy group in the molecule as represented by the following formulae (iii-1) to (iii-3), in addition to the compound represented by the formula (i). n1 to n6 in the following formulae (ii-1) and (ii-2) each represent an integer of 1 to 30.

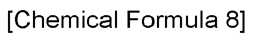

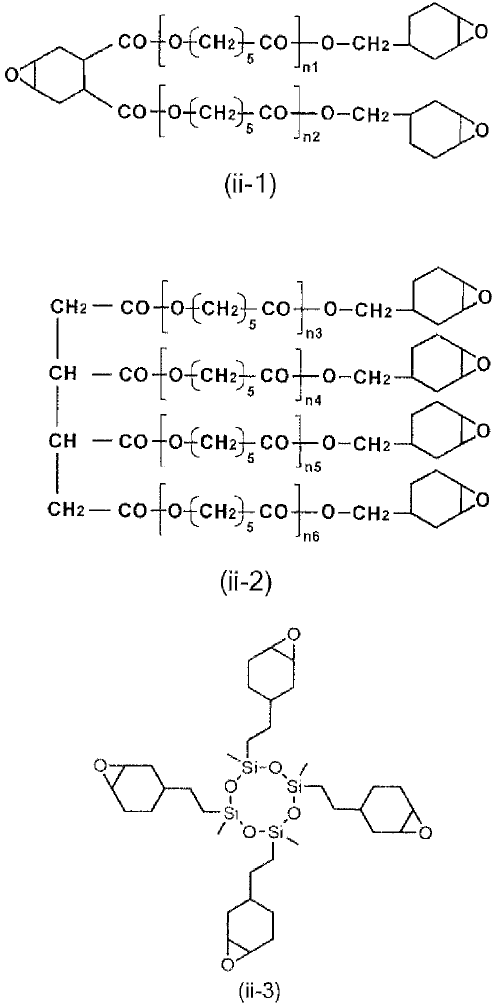

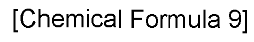

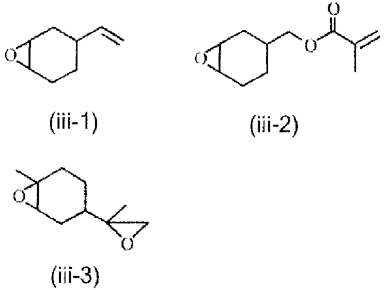

The epoxy equivalent of the alicyclic epoxy resin (A) is not particularly limited, but for example, for the purpose of improving the refractive index, preferably, the epoxy equivalent is moderately low to increase the content of a sulfur-containing active hydrogen compound such as a thiol-based compound. Similarly, for the purpose of improving the bending modulus of elasticity, preferably, the epoxy equivalent is moderately low to increase the content of a polyfunctional active hydrogen compound. From these viewpoints, the epoxy equivalent of the alicyclic epoxy resin (A) is preferably from 70 to 200 g/eq, and more preferably from 80 to 140 g/eq. The epoxy equivalent can be measured in accordance with JIS K 7236.

The content of the alicyclic epoxy resin (A) may be, for example, from 1 to 70 parts by mass relative to 100 parts by mass of a nonvolatile component of the curable composition, depending on the application, presence or absence of a filler, and the like. When the content of the alicyclic epoxy resin (A) is within the above range, a curable composition having a lower viscosity is easily obtained, and a cured product having higher transparency and weather resistance is easily obtained. Note that the nonvolatile component refers to a component that does not volatilize at room temperature, and specifically means a component other than the solvent.

### 1-2. Active hydrogen compound (B)/curing catalyst (C)

The active hydrogen compound (B) is a compound containing a functional group having active hydrogen. Examples of the functional group having active hydrogen include a phenolic hydroxyl group, a thiol group, and an amino group. The number of the functional group having active hydrogen contained in one molecule of the active hydrogen compound (B) is 2 or more. That is, the active hydrogen compound (B) may be a bifunctional active hydrogen compound (B') having two functional groups having active hydrogen in one molecule, or a trifunctional or higher functional active hydrogen compound having three or more functional groups having active hydrogen.

As described above, as a component for curing the alicyclic epoxy resin (A), the curable composition 1) contains an active hydrogen compound (B1) having a pKa of 10 or less, 2) contains an active hydrogen compound (B2) having a pKa of more than 10 and a cationic catalyst (C1), or 3) contains an active hydrogen compound (B2) having a pKa of more than 10 and a catalyst (C2) that generates a cation by reaction or light irradiation.

### Regarding 1)

### Active hydrogen compound (B1)

The pKa of the active hydrogen compound (B1) in 1) above is 10 or less, and preferably from 6 to 10. The active hydrogen compound having such a low pKa is likely to release H⁺, and thus is likely to activate the alicyclic epoxy resin. Due to this, the alicyclic epoxy resin may be cured even in the absence of a catalyst. The active hydrogen compound (B1) may be a bifunctional active hydrogen compound (B1') or a trifunctional or higher functional active hydrogen compound.

In the present specification, the pKa is an acid dissociation equilibrium constant, and is defined as pKa = - logKa, Ka = [H₃O⁺][B⁻]/[BH] (BH: organic acid, B⁻: conjugate base of organic acid). Note that in a case where two or more acidic groups are contained in one molecule of the curing agent, the pKa means a first dissociation constant pKa1.

The acid dissociation constant (pKa) of the active hydrogen compound varies depending on the structure of the active hydrogen compound. That is, the pKa of a compound in which a functional group having active hydrogen is directly bonded to an aromatic group (aromatic ring) is lower than the pKa of a compound in which the functional group is directly bonded to an aliphatic group. The pKa is lower in the order of thiol < alcohol < amine.

The acid dissociation constant (pKa) also varies depending on a solvent species around the active hydrogen compound. As used herein, the pKa in water is used as an indicator to distinguish between the active hydrogen compound (B1) and the active hydrogen compound (B2). The pKa can be calculated from the concentration of the substance and a hydrogen ion concentration by measuring the hydrogen ion concentration in water using, for example, a pH meter. Alternatively, in a case where the pKa value is known in literature or the like (for example, pKa Data Compiled by R. Williams, https://organicchemistrydata.org/hansreich/resources/pka/pka_data/pka-compilation-williams.pdf), the pKa value may be employed, and in a case where the pKa value is not known in literature or the like, the active hydrogen compound is described by a rational formula, and the pKa value of a compound coinciding with a portion having two or more carbon atoms from the carbon atom bonded to the functional group having active hydrogen (a compound corresponding to a portion having two or more carbon atoms with the carbon atom bonded to the functional group having active hydrogen as a starting point) may be employed.

In a case of a water-insoluble active hydrogen compound, the pKa can be estimated from the structure around the functional group serving as active hydrogen. For example, the pKa of 4,4'-thiobisbenzenethiol can be the value of the pKa of thiophenol.

Examples of the active hydrogen compound (B1) having a pKa of 10 or less include a thiol-based compound having a pKa of 10 or less and a bisphenol-based compound having a pKa of 10 or less. These curing agents may be each a compound in which an active hydrogen functional group such as thiol or alcohol is directly bonded to a conjugated structure such as a benzene ring. In the curing agent in which the conjugated structure and the active hydrogen functional group are bonded as described above, the conjugated base state is stabilized, and thus a hydrogen ion is easily released.

The bisphenol-based compound having a pKa of 10 or less is a compound having two phenolic hydroxyl groups in one molecule, and examples thereof include bisphenols such as 2,2-bis(4-hydroxyphenyl)propane (bisphenol A), 1,1-bis(4-hydroxyphenyl)ethane (bisphenol AD), bis(hydroxyphenyl)methane (bisphenol F), bisphenolfluorene, and biscresolfluorene.

The thiol-based compound having a pKa of 10 or less is a compound having two or more thiol groups in one molecule and having a pKa satisfying the above range, and is preferably a thiol-based compound containing an aromatic ring (aromatic thiol-based compound). The number of aromatic rings contained in one molecule of the aromatic thiol-based compound may be at least 1, preferably from 1 to 3, and more preferably from 1 to 2.

Examples of the aromatic thiol-based compound include: bifunctional aromatic thiol-based compounds such as 1,2-dimercaptobenzene, 1,3-dimercaptobenzene, 1,4-dimercaptobenzene, 1,2-bis(mercaptomethyl)benzene, 1,3-bis(mercaptomethyl)benzene, 1,4-bis(mercaptomethyl)benzene, 1,3-bis(mercaptoethyl)benzene, 1,4-bis(mercaptoethyl)benzene, 1,2-bis(mercaptomethoxy)benzene, 1,3-bis(mercaptomethoxy)benzene, 1,4-bis(mercaptomethoxy)benzene, 1,2-bis(mercaptoethoxy)benzene, 1,3-bis(mercaptoethoxy)benzene, 1,4-bis(mercaptoethoxy)benzene, 2,2'-dimercaptobiphenyl, 4,4'-dimercaptobiphenyl, 4,4'-dimercaptobibenzyl, 2,5-toluenedithiol, 3,4-toluenedithiol, 1,4-naphthalenedithiol, 1,5-naphthalenedithiol, 2,6-naphthalenedithiol, 2,7-naphthalenedithiol, 2,4-dimethylbenzene-1,3-dithiol, 4,5-dimethylbenzene-1,3-dithiol, 9,10-anthracenedimethanethiol, 1,3-di(p-methoxyphenyl)propane-2,2-dithiol, 1,3-diphenylpropane-2,2-dithiol, phenylmethane-1,1-dithiol, and 2,4-di(p-mercaptophenyl)pentane; and trifunctional or higher functional aromatic thiol-based compounds such as 1,2,3-trimercaptobenzene, 1,2,4-trimercaptobenzene, 1,3,5-trimercaptobenzene, 1,2,3-tris(mercaptomethyl)benzene, 1,2,4-tris(mercaptomethyl)benzene, 1,3,5-tris(mercaptomethyl)benzene, 1,2,3-tris(mercaptoethyl)benzene, 1,2,4-tris(mercaptoethyl)benzene, 1,3,5-tris(mercaptoethyl)benzene, 1,2,3-tris(mercaptomethoxy)benzene, 1,2,4-tris(mercaptomethoxy)benzene, 1,3,5-tris(mercaptomethoxy)benzene, 1,2,3-tris(mercaptoethoxy)benzene, 1,2,4-tris(mercaptoethoxy)benzene, 1,3,5-tris(mercaptoethoxy)benzene, 1,2,3,4-tetramercaptobenzene, 1,2,3,5-tetramercaptobenzene, 1,2,4,5-tetramercaptobenzene, 1,2,3,4-tetrakis(mercaptomethyl)benzene, 1,2,3,5-tetrakis(mercaptomethyl)benzene, 1,2,4,5-tetrakis(mercaptomethyl)benzene, 1,2,3,4-tetrakis(mercaptoethyl)benzene, 1,2,3,5-tetrakis(mercaptoethyl)benzene, 1,2,4,5-tetrakis(mercaptoethyl)benzene, 1,2,3,4-tetrakis(mercaptoethyl)benzene, 1,2,3,5-tetrakis(mercaptomethoxy)benzene, 1,2,4,5-tetrakis(mercaptomethoxy)benzene, 1,2,3,4-tetrakis(mercaptoethoxy)benzene, 1,2,3,5-tetrakis(mercaptoethoxy)benzene, and 1,2,4,5-tetrakis(mercaptoethoxy)benzene.

The aromatic thiol-based compound may further include a sulfur atom in addition to the thiol group. Examples of such an aromatic thiol-based compound include: bifunctional aromatic thiol-based compounds such as 1,2-bis(mercaptomethylthio)benzene, 1,3-bis(mercaptomethylthio)benzene, 1,4-bis(mercaptomethylthio)benzene, 1,2-bis(mercaptoethylthio)benzene, 1,3-bis(mercaptoethylthio)benzene, 1,4-bis(mercaptoethylthio)benzene, and 4,4'-thiobisbenzenethiol; trifunctional or higher functional aromatic thiol-based compounds such as 1,2,3-tris(mercaptomethylthio)benzene, 1,2,4-tris(mercaptomethylthio)benzene, 1,3,5-tris(mercaptomethylthio)benzene, 1,2,3-tris (mercaptoethylthio)benzene, 1,2,4-tris(mercaptoethylthio)benzene, 1,3,5-tris(mercaptoethylthio)benzene, 1,2,3,4-tetrakis(mercaptomethylthio)benzene, 1,2,3,5-tetrakis(mercaptomethylthio)benzene, 1,2,4,5-tetrakis(mercaptomethylthio)benzene, 1,2,3,4-tetrakis(mercaptoethylthio)benzene, 1,2,3,5-tetrakis(mercaptoethylthio)benzene, 1,2,4,5-tetrakis(mercaptoethylthio)benzene, and 1,3,5-triazine-2,4,6-trithiol (thiocyanuric acid). One of these may be used alone, or two or more can be used in combination.

The thiol equivalent of the thiol-based compound having a pKa of 10 or less is not particularly limited, but is, for example, 300 g/eq or less, and preferably 150 g/eq or less. The thiol equivalent within this range facilitates further enhancement of the curing reactivity of the curable composition and the refractive index of the cured product.

The number of thiol groups (number of functional groups) contained in one molecule of the thiol-based compound having a pKa of 10 or less is, as described above, 2 (bifunctional) or 3 or more (trifunctional or higher functional), preferably from 2 to 10, more preferably from 2 to 4, and even more preferably 3. The number of thiol groups within this range facilitates further enhancement of the curing reactivity of the curable composition and the refractive index of the cured product.

The weight average molecular weight of the thiol-based compound having a pKa of 10 or less is not particularly limited, but is preferably from 100 to 10000, and more preferably from 100 to 1000. The weight average molecular weight can be measured by GPC based on calibration with polystyrene.

Among them, the active hydrogen compound (B1) having a pKa of 10 or less preferably contains a thiol-based compound having a pKa of 10 or less, and more preferably contains a thiol-based compound having a pKa of 7 or less.

The content of the active hydrogen compound (B1) having a pKa of 10 or less is preferably from 15 to 400 parts by mass relative to 100 parts by mass of the total amount of the epoxy group-containing resin (preferably the total amount of the alicyclic epoxy resin (A)). When the content of the active hydrogen compound (B1) is 15 parts by mass or more, the alicyclic epoxy resin is more easily activated, and sufficient curing reactivity is easily obtained. When the content of the active hydrogen compound (B1) is 400 parts by mass or less, an increase in the viscosity of a cured composition is easily suppressed, and thus the handleability is further less likely to be impaired. From the same viewpoint, the content of the active hydrogen compound (B1) is more preferably from 30 to 200 parts by mass relative to 100 parts by mass of the total amount of the epoxy group-containing resin (preferably the total amount of the alicyclic epoxy resin (A)).

### Regarding 2)

In the case of 2) above, the active hydrogen compound (B2) having a pKa of more than 10 and the cationic catalyst (C1) are contained as components for curing the alicyclic epoxy resin.

### Active hydrogen compound (B2)

The pKa of the active hydrogen compound (B2) in 2) above is more than 10, and preferably from 10 to 14. An active hydrogen compound having such a high pKa is less likely to release H⁺, and thus is less likely to activate the alicyclic epoxy resin by itself. Accordingly, the alicyclic epoxy resin can be cured by further combining with the cationic catalyst (C1) capable of generating H⁺. The active hydrogen compound (B2) may be a bifunctional active hydrogen compound (B2') or a trifunctional or higher functional active hydrogen compound.

The active hydrogen compound (B2) having a pKa of more than 10 preferably contains an amine-based compound having a pKa of more than 10 or a thiol-based compound having a pKa of more than 10.

The amine-based compound having a pKa of more than 10 is a compound having two or more amino groups in one molecule and having a pKa in the above range, preferably 11 or more, and more preferably 15 or more, and preferably includes an amine-based compound containing an aromatic ring (aromatic amine-based compound).
Examples of the aromatic amine-based compound include 4,4'-diaminodiphenyl sulfide (available from SEIKA CORPORATION, ASD) and 4,4'-diaminodiphenyl sulfone (available from SEIKA CORPORATION, SEIKACURE-S). A primary amine can also be used in the present invention. The reason for this is assumed to be that a primary amine is reacted and then converted into a secondary amine to change the pKa, and that the alicyclic epoxy resin has a large steric hindrance of the epoxy group, as compared with the aromatic epoxy resin.

The thiol-based compound having a pKa of more than 10 is a compound having two or more thiol groups in one molecule and having a pKa satisfying the above range, and is preferably a thiol-based compound containing no aromatic ring (aliphatic thiol-based compound). The aliphatic thiol-based compound may be an aliphatic thiol-based compound having an ester bond in the molecule, or may be an aliphatic thiol-based compound having no ester bond in the molecule.

Examples of the aliphatic thiol-based compound having an ester bond in the molecule include:
bifunctional aliphatic thiol-based compounds such as 1,4-bis(3-mercaptobutyryloxy)butane (available from Showa Denko K.K., Karenz MT (trade name) BD1); and
trifunctional or higher functional aliphatic thiol-based compounds such as trimethylolpropane tris(3-mercaptopropionate) (available from SC Organic Chemical Co., Ltd., TMMP), tris-[(3-mercaptopropionyloxy)-ethyl]-isocyanurate (available from SC Organic Chemical Co., Ltd., TEMPIC), pentaerythritol tetrakis(3-mercaptopropionate) (available from SC Organic Chemical Co., Ltd., PEMP), tetraethylene glycol bis(3-mercaptopropionate) (available from SC Organic Chemical Co., Ltd., EGMP-4), dipentaerythritol hexakis(3-mercaptopropionate) (available from SC Organic Chemical Co., Ltd., DPMP), pentaerythritol tetrakis(3-mercaptobutyrate) (available from Showa Denko K.K., Karenz MT (trade name) PE1), and 1,3,5-tris(3-mercaptobutyryloxyethyl)-1,3,5-triazine-2,4,6(1H, 3H, 5H)-trione (available from Showa Denko K.K., Karenz MT (trade name) NR1).

Examples of the aliphatic thiol-based compound having no ester bond in the molecule include a compound represented by the following formula (1) or (2).

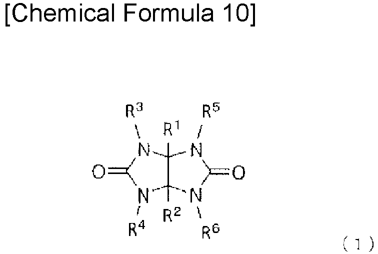

In the formula (1), R¹ and R² are each independently selected from the group consisting of a hydrogen atom and an alkyl group having 1 to 12 carbon atoms. R³, R⁴, R⁵, and R⁶ are each independently selected from the group consisting of a mercaptomethyl group, a mercaptoethyl group, and a mercaptopropyl group.

Examples of the compound represented by the formula (1) include 1,3,4,6-tetrakis(2-mercaptoethyl)glycoluril (available from SHIKOKU CHEMICALS CORPORATION, TS-G), (1,3,4,6-tetrakis(3-mercaptopropyl)glycoluril (available from SHIKOKU CHEMICALS CORPORATION, C3 TS-G), 1,3,4,6-tetrakis(mercaptomethyl)glycoluril, 1,3,4,6-tetrakis(mercaptomethyl)-3a-methylglycoluril, 1,3,4,6-tetrakis(2-mercaptoethyl)-3a-methylglycoluril, 1,3,4,6-tetrakis(3-mercaptopropyl)-3a-methylglycoluril, 1,3,4,6-tetrakis(mercaptomethyl)-3a,6a-dimethylglycoluril, 1,3,4,6-tetrakis(2-mercaptoethyl)-3a,6a-dimethylglycoluril, and 1,3,4,6-tetrakis(3-mercaptopropyl)-3a,6a-dimethylglycoluril. Of these, 1,3,4,6-tetrakis(2-mercaptoethyl)glycoluril and 1,3,4,6-tetrakis(3-mercaptopropyl)glycoluril are particularly preferred.

[Chemical Formula 11]

(R⁸) ₘ-A- (R⁷- SH)ₙ (2)

In the formula (2),
A is a residue of a polyhydric alcohol having n + m hydroxyl groups.
R⁷ is independently an alkylene group having 1 to 10 carbon atoms.
R⁸ is a hydrogen atom or an alkyl group having 1 to 10 carbon atoms.
m is an integer of 0 or more.
n is an integer of 3 or more.

Examples of the compound represented by the formula (2) include pentaerythritol tripropanethiol (available from SC Organic Chemical Co., Ltd., Multhiol Y-3) and pentaerythritol tetrapropanethiol. Of these, pentaerythritol tripropanethiol is particularly preferable.

In addition, as the aliphatic thiol-based compound having no ester bond in the molecule, a trifunctional or higher functional polythiol compound having two or more sulfide bonds in the molecule can also be used. Examples of such a thiol compound include: polythiol compounds having no cyclic structure such as 1,2,3-tris(mercaptomethylthio)propane, 1,2,3-tris(2-mercaptoethylthio)propane, 1,2,3-tris(3-mercaptopropylthio)propane, 4-mercaptomethyl-1,8-dimercapto-3,6-dithiaoctane, 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, tetrakis(mercaptomethylthiomethyl)methane, tetrakis(2-mercaptoethylthiomethyl)methane, tetrakis(3-mercaptopropylthiomethyl)methane, 1,1,3,3-tetrakis(mercaptomethylthio)propane, 1,1,2,2-tetrakis(mercaptomethylthio)ethane, 1,1,5,5-tetrakis(mercaptomethylthio)-3-thiapentane, 1,1,6,6-tetrakis(mercaptomethylthio)-3,4-dithiahexane, 2,2-bis(mercaptomethylthio)ethanethiol, 3-mercaptomethylthio-1,7-dimercapto-2,6-dithiaheptane, 3,6-bis(mercaptomethylthio)-1,9-dimercapto-2,5,8-trithianonane, 3-mercaptomethylthio-1,6-dimercapto-2,5-dithiahexane, 1,1,9,9-tetrakis(mercaptomethylthio)-5-(3,3-bis(mercaptomethylthio)-1-thiapropyl)3,7-dithianonane, tris(2,2-bis(mercaptomethylthio)ethyl)methane, tris(4,4-bis(mercaptomethylthio)-2-thiabutyl)methane, tetrakis(2,2-bis(mercaptomethylthio)ethyl)methane, tetrakis(4,4-bis(mercaptomethylthio)-2-thiabutyl)methane, 3,5,9,11-tetrakis(mercaptomethylthio)-1,13-dimercapto-2,6,8,12-tetrathiatridecane, 3,5,9,11,15,17-hexakis(mercaptomethylthio)-1,19-dimercapto-2,6,8,12,14,18-hexathianonadecane, 9-(2,2-bis(mercaptomethylthio)ethyl)-3,5,13,15-tetrakis(mercaptomethylthio)-1,17-dimercapto-2,6,8,10,12,16-hexathiaheptadecane, 3,4,8,9-tetrakis(mercaptomethylthio)-1,11-dimercapto-2,5,7,10-tetrathiaundecane, 3,4,8,9,13,14-hexakis(mercaptomethylthio)-1,16-dimercapto-2,5,7,10,12,15-hexathiahexadecane, 8-[bis(mercaptomethylthio)methyl]-3,4,12,13-tetrakis(mercaptomethylthio)-1,15-dimercapto-2,5,7,9,11,14-hexathiapentadecane, 4,6-bis[3,5-bis(mercaptomethylthio)-7-mercapto-2,6-dithiaheptylthio]-1,3-dithiane, 4-[3,5-bis(mercaptomethylthio)-7-mercapto-2,6-dithiaheptylthio]-6-mercaptomethylthio-1,3-dithiane, 1,1-bis[4-(6-mercaptomethylthio)-1,3-dithianylthio]-1,3-bis(mercaptomethylthio)propane, 1-[4-(6-mercaptomethylthio)-1,3-dithianylthio]-3-[2,2-bis(mercaptomethylthio)ethyl]-7,9-bis(mercaptomethylthio)-2,4,6,10-tetrathiaundecane, 3-[2-(1,3-dithietanyl)]methyl-7,9-bis(mercaptomethylthio)-1,11-dimercapto-2,4,6,10-tetrathiaundecane, 9-[2-(1,3-dithietanyl)]methyl-3,5,13,15-tetrakis(mercaptomethylthio)-1,17-dimercapto-2,6,8,10,12,16-hexathiaheptadecane, and 3-[2-(1,3-dithietanyl)]methyl-7,9,13,15-tetrakis(mercaptomethylthio)-1,17-dimercapto-2,4,6,10,12,16-hexathiaheptadecane; and polythiol compounds having a cyclic structure such as 4,6-bis[4-(6-mercaptomethylthio)-1,3-dithianylthio]-6-[4-(6-mercaptomethylthio)-1,3-dithianylthio]-1,3-dithiane, 4-[3,4,8,9-tetrakis(mercaptomethylthio)-11-mercapto-2,5,7,10-tetrathiaundecyl]-5-mercaptomethylthio-1,3-dithiolane, 4,5-bis[3,4-bis(mercaptomethylthio)-6-mercapto-2,5-dithiahexylthio]-1,3-dithiolane, 4-[3,4-bis(mercaptomethylthio)-6-mercapto-2,5-dithiahexylthio]-5-mercaptomethylthio-1,3-dithiolane, 4-[3-bis(mercaptomethylthio)methyl-5,6-bis(mercaptomethylthio)-8-mercapto-2,4,7-trithiaoctyl]-5-mercaptomethylthio-1,3-dithiolane, 2-{bis[3,4-bis(mercaptomethylthio)-6-mercapto-2,5-dithiahexylthio]methyl}-1,3-dithietane, 2-[3,4-bis(mercaptomethylthio)-6-mercapto-2,5-dithiahexylthio]mercaptomethylthiomethyl-1,3-dithietane, 2-[3,4,8,9-tetrakis(mercaptomethylthio)-11-mercapto-2,5,7,10-tetrathiaundecylthio]mercaptomethylthiomethyl-1,3-dithietane, 2-[3-bis(mercaptomethylthio)methyl-5,6-bis(mercaptomethylthio)-8-mercapto-2,4,7-trithiaoctyl]mercaptomethylthiomethyl-1,3-dithietane, and 4-{1-[2-(1,3-dithietanyl)]-3-mercapto-2-thiapropylthio}-5-[1,2-bis(mercaptomethylthio)-4-mercapto-3-thiabutylthio]-1,3-dithiolane.

The thiol equivalent of the thiol-based compound having a pKa of more than 10 is not particularly limited, but is, for example, from 90 to 160 g/eq, and preferably from 90 to 140 g/eq. When the thiol equivalent is in this range, the curing reactivity of the curable composition is good. This facilitates further enhancement of the curing reactivity of the curable composition and further improvement of the refractive index, bending modulus of elasticity, and the like of the cured product.

The number of thiol groups (number of functional groups) contained in one molecule of the thiol-based compound having a pKa of more than 10 is, as described above, 2 (bifunctional) or 3 (trifunctional) or more, preferably from 2 to 4, more preferably from 3 to 4, and still more preferably 4. When the number of thiol groups is equal to or greater than the lower limit value, the curing reactivity of the curable composition is further easily enhanced, and the refractive index, the bending modulus of elasticity, and the like of the cured product are also further easily enhanced. In addition, when the number of thiol groups is 4 or less, it is possible to further reduce the number of remaining unreacted thiol groups and to suppress a decrease in physical properties.

The weight average molecular weight of the thiol-based compound having a pKa of more than 10 is not particularly limited, but is preferably from 100 to 10000, and more preferably from 100 to 1000. The weight average molecular weight can be measured by the same method as described above.

The content of the active hydrogen compound (B2) having a pKa of more than 10 is from 40 to 200 parts by mass relative to 100 parts by mass of the total amount of the epoxy group-containing resin (preferably the total amount of the alicyclic epoxy resin). When the content of the curing agent (B2) is 40 parts by mass or more, the alicyclic epoxy resin is more easily activated and the curing reactivity is more easily enhanced. When the content of the active hydrogen compound (B2) is 200 parts by mass or less, an increase in the viscosity of the cured composition can be further suppressed, and thus the handleability is further less likely to be impaired. From the same viewpoint, the content of the curing agent (B2) is more preferably from 50 to 150 parts by mass relative to 100 parts by mass of the total amount of the epoxy group-containing resin (preferably the total amount of the alicyclic epoxy resin).

### Cationic catalyst (C1)

The cationic catalyst (C1) is a compound that promotes the release of H⁺ and does not promote self-polymerization of the epoxy resin alone but promotes the reaction between the epoxy resin and the active hydrogen compound. The fact that the self-polymerization is not promoted can be confirmed by the fact that a mixture of only the epoxy resin and the catalyst does not generate heat (cure) by heat. In the self-polymerization reaction, two epoxy groups react with one epoxy group, that is, in an alicyclic epoxy resin having two epoxy groups, four epoxy groups react per one molecule, and thus, the degree of crosslinking increases and the toughness is likely to decrease. On the other hand, the cationic catalyst (C1) plays a role to promote activation of the epoxy group and activation of the active hydrogen compound without causing such self-polymerization reaction. The direct addition of the cationic catalyst (C1) serving as a cation allows the reaction to proceed rapidly. Accordingly, when it is desired to suppress heating/light irradiation energy required in an environment where heating is impossible, such as in a cold district, or for generation of cations such as the catalyst (C2), it can also be used as a catalyst for a two-part type curable composition.

The activation of an epoxy group refers to interaction with oxygen of the epoxy group to facilitate nucleophilic attack on carbon of the epoxy group. Examples of the compound capable of interacting with oxygen of the epoxy group include a positively charged compound. The reaction mechanism is that the oxygen atom of the epoxy group interacts with a positively charged catalyst, and the carbon atom of the epoxy group becomes slightly positively charged to promote the nucleophilic attack of an activated hydrogen compound. The activation of the active hydrogen compound refers to extraction of hydrogen from the active hydrogen compound.
Thus, the cationic catalyst (C1) is a base used for curing of an epoxy resin, and is preferably a compound that maintains a positively charged state after extraction of hydrogen and has a three-dimensional structure capable of interacting with oxygen of the epoxy group.

Such a cationic catalyst (C1) is preferably an amine. Examples of the amine include an ammonium salt, an amine having an amidine structure, and an amine having a guanidine structure.
Examples of the ammonium salt include triethylmethylammonium 2-ethylhexanoate (product name: U-CAT 18X, available from San-Apro Ltd.). Examples of the amine having an amidine structure include diazabicycloundecene (DBU) and diazabicyclononene (DBN), and examples of salts of the amine include a 2-ethylhexanoate of DBU (product name: SA1, available from San-Apro Ltd.).
Examples of the amine having a guanidine structure (including piguanide) include tetramethylguanidine, and examples of salts thereof include 1,2-dicyclohexyl-4,4,5,5-tetramethylbiguanidium n-butyltriphenylborate (product name: WPGK-300 (FUJIFILM Wako Pure Chemical Industries, Ltd.)). Among these, amines having an amidine structure or salts thereof, amines having a guanidine structure or salts thereof are preferable, and amines having a guanidine structure or salts thereof are more preferable.

The content of the cationic catalyst (C1) is preferably from 1 to 10 parts by mass relative to 100 parts by mass of the total amount of the epoxy group-containing resin (preferably the total amount of the alicyclic epoxy resin). When the content of the cationic catalyst (C1) is 1 part by mass or more, the alicyclic epoxy resin is more easily activated, and sufficient curing reactivity is easily obtained. When the content of the cationic catalyst (C1) is 10 parts by mass or less, the time during which the composition can be used without curing after the addition of the catalyst (referred to as pot life) can be extended. In addition, it is possible to further suppress a decrease in physical properties such as a glass transition temperature and a modulus of elasticity due to an excessive amount of the catalyst remaining in the cured product. From the same viewpoint, the content of the cationic catalyst (C1) is more preferably from 1 to 5 parts by mass relative to 100 parts by mass of the total amount of the epoxy group-containing resin (preferably the total amount of the alicyclic epoxy resin).

### Regarding 3)

In the case of 3) above, the active hydrogen compound (B2) having a pKa of more than 10 and the catalyst (C2) that generates a cation by reaction or light irradiation are contained as components for curing the alicyclic epoxy resin. As described above, an active hydrogen compound having a high pKa is less likely to release H⁺, and thus is less likely to activate the alicyclic epoxy resin by itself. Accordingly, it is possible to enhance the curing reactivity of the alicyclic epoxy resin by further combining the catalyst (C2) that can generate H⁺ by reaction or light irradiation. In addition, the curing timing can be adjusted by the timing of the reaction or the light irradiation, and thus compatibility with the storage stability can be easily achieved. Furthermore, the curable composition containing the catalyst (C2) has fluidity even when stored at 40°C/24 h, for example, and is excellent in storage stability. Accordingly, the catalyst (C2) is particularly suitable as a catalyst for one-part curable compositions.

### Active hydrogen compound (B2) having pKa of more than 10

As the active hydrogen compound (B2) having a pKa of more than 10, the same compounds as described above can be used, and it is selected depending on the type of the catalyst (C2). For example, in a case where the catalyst (C2) is dicyandiamide, the active hydrogen compound (B2) is preferably an active hydrogen compound that reacts with dicyandiamide to produce guanidine (reaction-promoting substance).

In a case where the active hydrogen compound (B2) is a thiol-based compound, dicyandiamide reacts by heating as follows to produce guanidine.

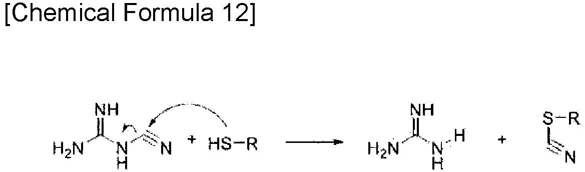

The generated guanidine further reacts with the thiol-based compound to form a guanidinium ion, which promotes ring opening of the alicyclic epoxy resin (see below).

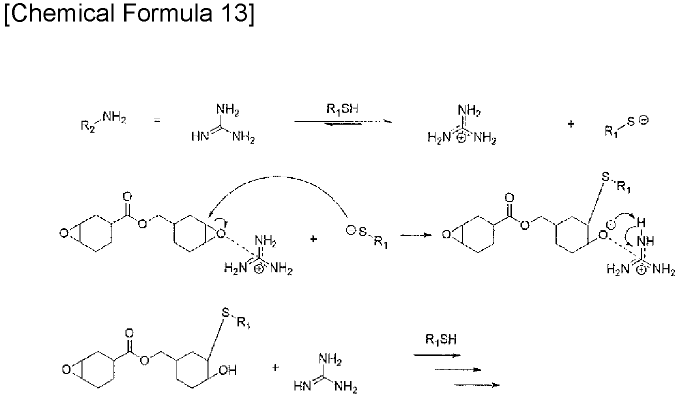

**The** compound that reacts with dicyandiamide to generate guanidine is preferably an aliphatic thiol-based compound, more preferably a tetrafunctional or higher functional aliphatic thiol-based compound, and still more preferably 1,3,4,6-tetrakis(2-mercaptoethyl)glycoluril and 1,3,4,6-tetrakis(3-mercaptopropyl)glycoluril.

**The** content of the active hydrogen compound (B2) having a pKa of more than 10 may be the same as in the case of 2) above.

### Catalyst (C2) that generates cation by reaction or light irradiation

The catalyst (C2) that generates a cation by reaction or light irradiation generates a cation by reaction with the active hydrogen compound (B2) or light irradiation.

The catalyst that generates a cation by reaction has the same function as the cationic catalyst (C1) except that it contributes to activation of the epoxy group by being positively charged after activation of the active hydrogen compound (B2). Examples of such a catalyst include dicyandiamide. It is possible to control the start of curing by controlling the reaction with the active hydrogen compound (B2), which is desirable.

Examples of the catalyst that generates a cation by light irradiation include a photobase generator. Examples of the photobase generator include a carboxylate, a salt containing a borate anion, and a quaternary ammonium salt.

In a case where a carboxylate or a salt containing a borate anion is used, a strong base such as an amidine, guanidine, or phosphazene base can be generated from a weak base such as an aliphatic amine-based compound. Thus, the reaction with the alicyclic epoxy resin easily proceeds in a chain reaction manner, which easily enhances the curing reactivity.
In a case where a quaternary ammonium salt is used, it preferably contains imidazole or amidine as a base-reactive substance from the viewpoint of enhancing the curing reactivity.

Among them, from the viewpoint of easily generating a strong base and enhancing the curing reactivity, (8E)-8-ethylidene-4-methoxy-5,6,7,8 tetrahydronaphthalene-1-carboxylate 1,8-diazabicyclo[5,4,0]undec-7-ene, 1,2-diisopropyl-3-[bis(dimethylamino)methylene]guanidium 2-(3-benzoylphenyl)propionate, 1,2-dicyclohexyl-4,4,5,5-tetramethyldiguadium n-butyltriphenylborate, and (2-(9-oxoxanthen-2-yl)propionate 1,5,7-triazabicyclo[4,4,0]dec-5-ene)) are preferable.

The content of the catalyst (C2) is preferably from 0.5 to 10 parts by mass relative to 100 parts by mass of the total amount of the epoxy group-containing resin (preferably the total amount of the alicyclic epoxy resin). When the content of the catalyst (C2) is 0.5 parts by mass or more, the alicyclic epoxy resin is more easily activated, and sufficient curing reactivity is easily obtained. When the content of the catalyst (C2) is 10 parts by mass or less, it is possible to further suppress a decrease in physical properties such as a glass transition temperature and a modulus of elasticity due to the catalyst remaining excessively in the cured product. From the same viewpoint, the content of the catalyst (C2) is more preferably from 1 to 5 parts by mass relative to 100 parts by mass of the total amount of the epoxy group-containing resin (preferably the total amount of the alicyclic epoxy resin).

In addition, in the case of the catalyst (C2) that generates a cation by reaction, the content of the catalyst (C2) is preferably from 0.5 to 10 parts by mass, and more preferably from 1 to 5 parts by mass relative to 100 parts by mass of the active hydrogen compound (B2). The content of the catalyst (C2) within the above range facilitates generation of a sufficient amount of guanidine by the reaction with the active hydrogen compound (B2) and further enhancement of the curing reactivity.

### 1-3. Other Components

The curable composition may further include other components depending on the application. Examples of the other components include another epoxy resin, a sensitizer, an antioxidant, a surfactant, a coupling agent, a stabilizer, a filler, a solvent.

Examples of another epoxy resin include an aliphatic epoxy resin and an aromatic epoxy resin. In a case where the curable composition further contains another epoxy resin, the content of the other epoxy resin is preferably smaller than the content of the alicyclic epoxy resin, for example, from the viewpoint of suppressing a decrease in storage stability or bending modulus of elasticity.

In the case of using the catalyst (C2) that generates a cation by light irradiation, a sensitizer may be further used in combination. The sensitizer has a function of improving the sensitivity of the curing reaction. The sensitizer is a compound capable of transferring stimulation energy such as heat or light to another substance, and a sensitizer containing a naphthalene structure, an anthracene structure, or a thioxanthone structure can be used. The mass ratio of the sensitizer to the catalyst (C2) (sensitizer/catalyst (C2)) may be, for example, from 0.1 to 0.5 from the viewpoint of enhancing the activity of the catalyst (C2).

In a case where a thiol-based compound is used as the active hydrogen compound (B), the pot life can be extended by using a stabilizer as the curing accelerator. Examples of the stabilizer include borates such as triethyl borate, triisopropyl borate, trimethyl borate, tri-n-propyl borate, and tri-n-butyl borate.

In addition, in a case where the curable composition is used for a coating material or the like, the alicyclic epoxy resin (A) has a low viscosity, and thus it is expected that the curable composition can be used without adding a solvent. However, in a case where further reduction in viscosity is required, a solvent may be further contained. The content of the solvent is preferably from 0 to 100%, more preferably from 0 to 50%, and still more preferably from 0 to 20% relative to the nonvolatile components of the curable composition.

In addition, from the viewpoint of further shortening the curing time of the curable composition, the content of the acid anhydride-based curing agent is preferably small. Specifically, the content of the acid anhydride-based curing agent may be 40 parts by mass or less, preferably 20 parts by mass or less, and more preferably 10 parts by mass or less relative to 100 parts by mass of the curable composition.

Although the curable composition containing the alicyclic epoxy resin (A), the active hydrogen compound (B), and the optional curing catalyst (C) is described in the above-described embodiment, the present invention is not limited thereto, and a two-part type curable composition in which a first liquid and a second liquid to be mixed at the time of use are combined may be used.

For example, in a case where the cationic catalyst (C1) is used, the first liquid containing the alicyclic epoxy resin (A) and the cationic catalyst (C1), and the second liquid containing the active hydrogen compound (B2) may be combined to form a two-part type curable composition. Note that the alicyclic epoxy resin (A) is contained in at least one of the first liquid or the second liquid. In the two-part type curable composition, the viscosities of the first liquid and the second liquid are preferably close to each other from the viewpoint of ease of mixing. That is, to adjust the viscosities of the first liquid and the second liquid, the alicyclic epoxy resin (A) may be contained in both the first liquid and the second liquid.
On the other hand, in a case where the catalyst (C2) is used, the first liquid containing the alicyclic epoxy resin (A) and the second liquid containing the active hydrogen compound (B2) and the catalyst (C2) may be combined to form a two-part type curable composition. In the two-part type curable composition, the viscosities of the first liquid and the second liquid are preferably close to each other from the viewpoint of ease of mixing. In a case where the alicyclic epoxy resin (A) is added to both the first liquid and the second liquid to adjust the viscosities of the first liquid and the second liquid, the first liquid containing the alicyclic epoxy resin (A) and the catalyst (C2) and the second liquid containing the alicyclic epoxy resin (A) and the active hydrogen compound (B2) may be combined to form a two-part type curable composition.

Note that in the curable composition according to the above-described embodiment, a component (A) and a component (B) that have any number of functional groups may be combined, but from the viewpoint of further imparting a thermoplastic resin to a cured product while having good curing reactivity, a bifunctional component (A) and a bifunctional component (B) are preferably combined.

That is, the curable composition can contain a bifunctional alicyclic epoxy resin (A'), a bifunctional active hydrogen compound (B'), and an optional curing catalyst (C). As a component for curing the bifunctional alicyclic epoxy resin (A'), the curable composition can
1) contain a bifunctional active hydrogen compound (B1') having a pKa of 10 or less;
2) contain a bifunctional active hydrogen compound (B2') having a pKa of more than 10 and a cationic catalyst (C1); or
3) contain a bifunctional active hydrogen compound (B2') having a pKa of more than 10 and a catalyst (C2) that generates a cation by reaction or light irradiation.

The bifunctional alicyclic epoxy resin (A') is the above-described bifunctional alicyclic epoxy resin (A'). Examples of the bifunctional alicyclic epoxy resin (A') include compounds represented by the above-described formula (i).

The bifunctional active hydrogen compound (B1') is the above-described bifunctional active hydrogen compound (B1'). Examples of the bifunctional active hydrogen compound (B1') include the above-described bifunctional bisphenol compounds having a pKa of 10 or less and bifunctional thiol-based compounds having a pKa of 10 or less.

The thiol equivalent of the bifunctional thiol-based compound having a pKa of 10 or less is not particularly limited, but is, for example, 2000 g/eq or less, and preferably from 60 to 250 g/eq. The thiol equivalent within this range facilitates further enhancement of the curing reactivity of the curable composition and the refractive index of the cured product.

The bifunctional active hydrogen compound (B2') is the above-described bifunctional active hydrogen compound (B2'). Examples of the bifunctional active hydrogen compound (B2') include the above-described bifunctional amine-based compounds having a pKa of more than 10 and bifunctional thiol-based compounds having a pKa of more than 10.

The thiol equivalent of the bifunctional thiol-based compound having a pKa of more than 10 is not particularly limited, but is, for example, from 90 to 180 g/eq, and preferably from 110 to 160 g/eq. When the thiol equivalent is in this range, the curing reactivity of the curable composition is good.

The cationic catalyst (C1) and the catalyst (C2) that generates a cation by reaction or light irradiation are the same as the cationic catalyst (C1) and the catalyst (C2) that generates a cation by reaction or light irradiation as described above.

Specific examples and contents of the bifunctional alicyclic epoxy resin (A'), the bifunctional active hydrogen compound (B1'), the bifunctional active hydrogen compound (B2'), the cationic catalyst (C1), and the catalyst (C2) that generates a cation by reaction or light irradiation may be the same as in the above-described embodiment. The content mass ratio of the bifunctional alicyclic epoxy resin (A') and the bifunctional active hydrogen compound (B1') or the bifunctional active hydrogen compound (B2') can be the same as the content mass ratio of the alicyclic epoxy resin (A) and the active hydrogen compound (B1) or the active hydrogen compound (B2) described above.

### 2. Cured Product

A cured product according to an embodiment of the present invention is a cured product of the curable composition.

### Refractive index

Although a cured product of an alicyclic epoxy resin has good transparency, it does not have an aromatic ring and thus tends to have a lower refractive index than that of a cured product of an aromatic epoxy resin. On the other hand, in a case where the active hydrogen compound (B) of the curable composition contains a thiol-based compound, the cured product contains a sulfur element and thus has a high refractive index. A cured product having a high refractive index is suitable for optical applications, for example.

The cured product composed only of a resin has a refractive index at a wavelength of 589 nm (approximate to the wavelength of D line) of preferably 1.52 or more, more preferably from 1.52 to 1.70, and still more preferably from 1.56 to 1.66. In addition, inorganic particles may be added to increase the refractive index. The refractive index can be measured using an Abbe refractometer under the condition of the wavelength of 589 nm.

The refractive index of the cured product can be adjusted by the type and content of the thiol-based compound contained in the curable composition, the number of functional groups (the number of thiol groups), and the like. For example, an aromatic thiol-based compound is more likely to increase the refractive index of the cured product than an aliphatic thiol-based compound. In addition, when the content of the thiol-based compound in the cured composition is large and the number of functional groups is large, the refractive index of the cured product is likely to be high.

### Bending characteristics

A cured product of a curable composition containing an acid anhydride-based curing agent or cationic curing agent in the related art has a high crosslinking density, and thus is likely to be brittle. On the other hand, in the case where the curable composition contains a thiol-based compound, particularly an aliphatic thiol-based compound as the active hydrogen compound (B) as a curing agent (see 2) and 3) above), flexibility can be imparted to the cured product, which easily enhances toughness. That is, the cured product of the curable composition containing the thiol-based compound exhibits a high bending modulus of elasticity equivalent to that in the case of using the acid anhydride-based curing agent while having good flexibility. The reason for this is not clear but is presumed as follows.

The first reason is that the thiol-based compound does not go through an oxygen anion due to its reaction mechanism, and thus the reaction of the alicyclic epoxy resin of itself does not occur. Accordingly, a flexible structure derived from the thiol-based compound is relatively uniformly incorporated into the molecular structure.
The second reason is that the curing reactivity between the alicyclic epoxy resin and the thiol-based compound is high, and thus a large number of hydroxyl groups are generated by ring opening. Accordingly, due to the hydrogen bond between the generated hydroxyl groups, a high modulus of elasticity is exhibited against an initial stress. On the other hand, it is presumed that when a stress equal to or greater than the hydrogen bond is applied, the hydrogen bond is broken and a low modulus of elasticity is exhibited, thereby exhibiting a high strain rate and a high yield point.

Specifically, the cured product of the curable composition can have a yield point in a stress-strain curve of a bending test in accordance with JISK7171. The bending modulus of elasticity of the cured product containing no filler measured by the above bending test is preferably from 2900 to 4000 N/mm², more preferably from 3100 to 3600 N/mm², and even more preferably from 3200 to 3500 N/mm². In addition, the flexural strength of the cured product measured by the bending test is preferably from 100 to 180 N/mm², more preferably from 110 to 180 N/mm², and still more preferably from 130 to 170 N/mm². The strain rate of the cured product measured by the bending test is preferably from 4 to 10%, more preferably from 5 to 10%, and still more preferably from 8 to 10%.

The bending test of the cured product can be performed in accordance with JIS K 7171.
That is, a cured product having a thickness of 3 mm is cut into a size of 80 mm × 10 mm to obtain a test piece. Using this test piece, a bending modulus of elasticity, a flexural strength, and a bending strain (hereinafter, referred to as a strain rate) were measured by a three-point bending test in accordance with JIS K 7171, with the inter-fulcrum distance set to 50 mm and the test speed set to 1.5 mm/min. The yield point refers to the first point where an increase in strain occurs without an increase in stress during the test.

The bending modulus of elasticity, strain rate, and flexural strength of the cured product can be adjusted by the type and number of functional groups of the thiol-based compound. For example, when the thiol-based compound has a ring structure or has a large number of functional groups, the bending modulus of elasticity or the like of the cured product is likely to be high.

Note that the cured product of the curable composition containing the active hydrogen compound (B2) and dicyandiamide as the catalyst (C2) of 3) above contains guanidine as a main product and thiocyanic acid as a byproduct by the reaction with the active hydrogen compound (B2).

The content of guanidine in the cured product is, for example, from 0.005 to 1 mass%, and preferably from 0.01 to 0.2 mass%.

The content of guanidine can be measured by ion chromatography. Specifically, measurement can be performed by the following procedure.
1) First, the cured product is preliminarily pulverized with a hammer to a size that allows the cured product to enter a pulverizer (in a case where the cured product cannot be crushed, the cured product is pulverized under refrigeration). A blade of M22 is set in a universal pulverizer M20 available from IKA, and the preliminarily pulverized product was charged thereto in a water-cooled state and pulverized for 1 minute. The pulverized cured product is sieved with 60 mesh, and this is repeated until about 2 g of fine powder is obtained.
2) Then, water of 5 times the amount of the obtained fine powder is added, and the mixture is heated at 120°C for 20 hours in a PCT pressure vessel, cooled to room temperature, and then filtered with filter paper (5C). The obtained extract is weighed in a test tube, diluted with water to a constant volume, dissolved or extracted with ultrasonic waves for 10 minutes, and filtered with a membrane filter.
3) For the obtained solution, ion chromatography measurement is performed. The measurement conditions are as follows.

### Measurement conditions

Apparatus: TOSOH IC-2010
Column: Shodex IC YS-50 (125 × 4.6 mm I.D.)
Short column: Shodex IC YS-G (10 × 4.6 mm I.D.)
Suppressor: Non-suppressor
Eluent: 4 mM CH₃SO₃H
Eluent flow rate: 1.0 mL/min
Column temperature: 40°C
Injection volume: 30 µL
Detector: Electrical conductivity (CD)

In a case where the curable composition contains the bifunctional alicyclic epoxy resin (A') and the bifunctional active hydrogen compound (B'), the cured product thereof has a structure in which the bifunctional alicyclic epoxy resin (A') and the bifunctional active hydrogen compound (B') are linearly polymerized, and thus has sufficient thermoplasticity. That is, the cured product is a thermoplastic resin containing a structural unit derived from the bifunctional alicyclic epoxy resin (A') and a structural unit derived from the bifunctional active hydrogen compound (B').

The content mass ratio of the structural unit derived from the bifunctional alicyclic epoxy resin (A') to the structural unit derived from the bifunctional active hydrogen compound (B') (bifunctional active hydrogen compound (B1') or bifunctional active hydrogen compound (B2')) in the thermoplastic resin is the same as the content mass ratio of the structural unit derived from the bifunctional alicyclic epoxy resin (A') to the structural unit derived from the bifunctional active hydrogen compound (B') (bifunctional active hydrogen compound (B1') or bifunctional active hydrogen compound (B2')) in the curable composition.

The total content of the structural unit derived from the bifunctional alicyclic epoxy resin (A') and the structural unit derived from the bifunctional active hydrogen compound (B') may be 4 mass% or more, and preferably 60 mass% or more, relative to the nonvolatile content of all the structural units constituting the thermoplastic resin. When the total content is within the range, higher thermoplasticity is likely to be obtained. In addition, in a case where the active hydrogen compound (B') is a thiol-based compound, the refractive index of the thermoplastic resin is further easily increased.

The thermoplastic resin has self-repairing properties.
That is, the bifunctional alicyclic epoxy resin (A') and the bifunctional active hydrogen compound (B') are highly linearly polymerized, and thus the thermoplastic resin has sufficient thermoplasticity, and molecules thereof are easily moved by heating. Thereby, a physical self-repairing property is exhibited. In addition, in the thermoplastic resin, the epoxy groups of the alicyclic epoxy resin (A') have many hydroxyl groups generated by the reaction with the bifunctional active hydrogen compound (B'), and thus hydrogen bonds are easily formed between molecules. In a case where the active hydrogen compound (B') contains an aromatic ring, a π-π bond is likely to be formed between molecules. Due to these reversible bonds, a chemical self-repairing property is exhibited. Due to these effects, the thermoplastic resin is assumed to exhibit the self-repairing properties.

### 3. Method for Producing Cured Product

The cured product can be produced by heating and curing the curable composition.

The heating temperature depends on the type of the active hydrogen compound (B). For example, in a case of using a thiol-based compound, the heating temperature may be from 0 to 250°C, preferably from 60 to 120°C, and more preferably from 100 to 120°C. The heating time may be from 0.02 to 3 hours, and preferably from 0.1 to 1 hour.

In a case where the curable composition contains the catalyst (C2) that generates a cation by the reaction of 3) above, the alicyclic epoxy resin (A), the active hydrogen compound (B2), and the catalyst (C2) may be mixed at the same time, followed by heating for curing; or the active hydrogen compound (B2) and the catalyst (C2) may be reacted first, and then the alicyclic epoxy compound (A) may be mixed therewith, followed by heating for curing.

For example, the cured product can be also obtained through a step of reacting the active hydrogen compound (B2) with dicyandiamide under heating to obtain a composition containing guanidine, and a step of reacting the composition with the alicyclic epoxy compound (A) under heating to obtain a cured product. When the active hydrogen compound (B2) is reacted with dicyandiamide in advance before mixing with the alicyclic epoxy compound (A) as described above, the curing reaction can be started in a shorter time, and the curing reaction can be more easily caused.

The heating temperature when the active hydrogen compound (B2) is reacted with dicyandiamide is in a range in which the active hydrogen compound (B2) reacts with dicyandiamide, and may be, for example, from 60 to 120°C, and more preferably from 100 to 120°C. The reaction time is, for example, such an extent that a certain amount or more of guadinium ions can be generated, and may be, for example, from 0.1 to 1 hour although depending on the temperature. After heating to a temperature at which dicyandiamide and thiol can react with each other, the composition may be cooled and cured at a low temperature of room temperature or lower, or may be cured for a shot time by maintaining the heated temperature or raising the temperature to the above-described heating temperature range.

In a case where the curable composition contains the catalyst (C2) that generates a cation by light irradiation of 3) above, the light irradiation conditions are in a range in which a base is generated from a photobase generator. For example, the wavelength of light for irradiation is preferably from 200 to 500 nm. The irradiation dose may be from 10 to 10000 mJ/cm². After cations are generated by light irradiation, curing may be performed at a low temperature of room temperature or lower, or may be performed for a short time by raising the temperature to the above-described heating temperature range.

### 4. Use of Cured Product

The cured product is obtained from the curable composition containing the alicyclic epoxy resin (A), and thus has good transparency and weather resistance. In particular, when a thiol-based compound is used as the active hydrogen compound (B), it is possible to obtain a cured product which is curable by light irradiation or low-temperature heating, has a high refractive index, and has appropriate flexibility, bending modulus of elasticity, and the like. Accordingly, the cured product can be preferably used for optical applications such as a sealing material and an adhesive for an optical semiconductor element and an organic electroluminescent element, a surface protective film, and a transparent display substrate, structural adhesive applications capable of withstanding a production environment where it is difficult to heat the whole adherend, and a damage such as collision, such as the automobile industry, protective films for touch panel sensors, and paint applications for protecting the surfaces of electronic devices and automobiles. In particular, the cured product has a high modulus of elasticity, and thus the bonding position of the adherend is maintained by a weak external force. On the other hand, the cured product has a yield point, and thus can be bent without being broken by a strong external force. Accordingly, it is suitable for a structural adhesive in the automobile industry.

### EXAMPLES

Hereinafter, the present invention will be further described with reference to Examples and Comparative Examples. The technical scope of the present invention is not limited to these.

### 1. Preparation of Materials

### 1-1. Epoxy resin

### Alicyclic epoxy resin (A)

A-1: Celloxide 2021P (available from Daicel Corporation, bifunctional, epoxy equivalent 130 g/eq) 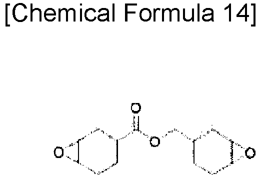
A-2: Celloxide 8010 (available from Daicel Corporation, bifunctional, epoxy equivalent 100 g/eq) 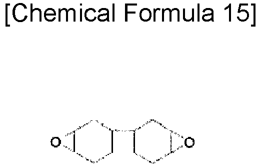
A-3: Celloxide 2081 (available from Daicel Corporation, bifunctional, epoxy equivalent 200 g/eq)
A-4: THI-DE (available from ENEOS Corporation, bifunctional, epoxy equivalent 80 g/eq) 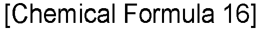 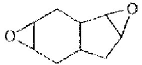
A-5: X-40-2669 (available from Shin-Etsu Chemical Co., Ltd., bifunctional, epoxy equivalent 200 g/eq) 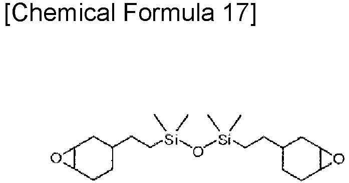
A-6: KR-470 (available from Shin-Etsu Chemical Co., Ltd., tetrafunctional, epoxy equivalent 200 g/eq)

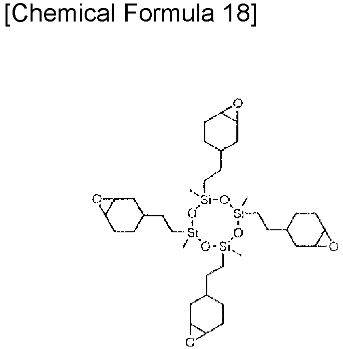

### Aromatic epoxy resin

835LV (available from DIC Corporation, bis A/F epoxy resin, epoxy equivalent 165 g/eq)
JER604 (available from Mitsubishi Chemical Corporation, tetrafunctional, epoxy equivalent 120 g/eq)
JER630 (available from Mitsubishi Chemical Corporation, trifunctional, epoxy equivalent 98 g/eq)
850S (available from DIC Corporation, bifunctional, epoxy equivalent 189 g/eq)

### 1-2. Curing agent

### Active hydrogen compound (B1) having pKa of 10 or less

B1-1: 1,3,5-triazine-2,4,6-trithiol (thiocyanuric acid) (available from Tokyo Chemical Industry Co., Ltd., aromatic thiol (trifunctional), thiol equivalent 59.1 g/eq, pKa 4 to 6.5)
B1-2: 4,4'-thiobisbenzenethiol (available from FUJIFILM Wako Pure Chemical Industries, Ltd., aromatic thiol (bifunctional), thiol equivalent 126.2 g/eq, C₆H₅SH: pKa 6.52 to 8.2)
B1-3: Bisphenol A (available from Mitsui Chemicals, Inc., phenol (bifunctional), hydroxyl equivalent 114 g/eq, literature value: pKa 9.6)

### Active hydrogen compound (B2) having pKa of more than 10

B2-1: TS-G (available from SHIKOKU CHEMICALS CORPORATION, aliphatic thiol (tetrafunctional), thiol-equivalent 96 g/eq, CH₃CH₂SH: pKa 10.5) 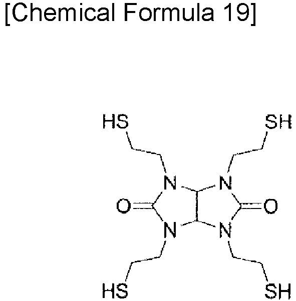
B2-2: PEMP (available from SC Organic Chemical Co., Ltd., aliphatic thiol (tetrafunctional), thiol equivalent 127 g/eq, CH₃CH₂SH: pKa 10.5) 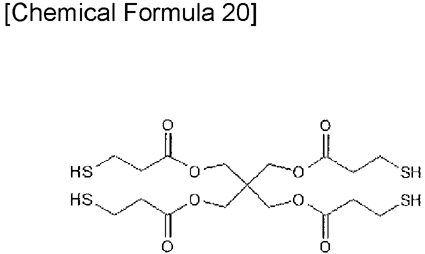
B2-3: Multhiol Y-3 (available from SC Organic Chemical Co., Ltd., aliphatic thiol (trifunctional), thiol equivalent 124 g/eq, CH₃CH₂SH: pKa 10.5) 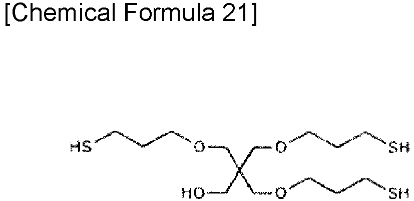
B2-4: Karenz MT BD1 (available from Showa Denko K.K., aliphatic thiol (bifunctional), thiol-equivalent 147 g/eq, CH₃CH₂SH: pKa 10.5) 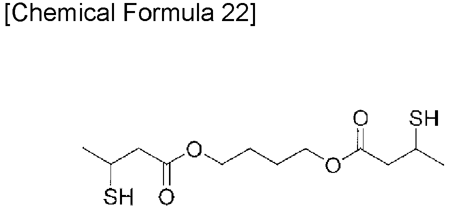
B2-5: ASD (available from SEIKA CORPORATION, aromatic amine (bifunctional), amine equivalent 54.075 g/eq, C₆H₅NH₂: pKa 28)

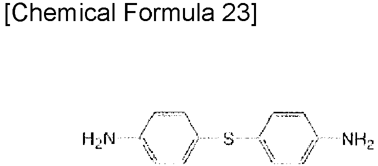

### Aliphatic amine-based compound

Isophoronediamine (available from FUJIFILM Wako Pure Chemical Industries, Ltd., aliphatic amine (bifunctional), amine equivalence 42.575 g/eq, reference Et₂NH-NH: pKa 36)

### Acid anhydride

RIKACID MH-700 (available from New Japan Chemical Co., Ltd., equivalent 163.5 g/eq)
The pKa was determined by the following method.

### pKa

As for pKa, for a compound whose pKa value is known in literature (https://organicchemistrydata.org/hansreich/resources/pka/pka_data/pka-compilation-williams.pdf), a value of pKa described in the literature was adopted. For a compound whose pKa value is not known in the literature, an active hydrogen compound is described by a rational formula, and the pKa value of a compound corresponding to a portion having two or more carbon atoms from a functional group having active hydrogen was adopted. Note that as the pKa of B1-3, a value described in Hazardous Substances Data Bank (HSDB): 513-PubChem (nih.gov) was adopted.

### 1-3. Curing catalyst

### Cationic catalyst (C1)

C1-1: SA1 (available from San-Apro Ltd., phenol salt of DBU, thermal base catalyst)
C1-2: SA102 (available from San-Apro Ltd., 2-ethylhexanoate of DBU, thermal base catalyst)
C1-3: Tetramethylguanidine (available from Tokyo Chemical Industry Co., Ltd., base catalyst)
C1-4: DBU (available from Tokyo Chemical Industry Co., Ltd., diazabicycloundecene, base catalyst)
C1-5: TPP-MK (available from HOKKO CHEMICAL INDUSTRY CO., LTD., tetraphenylphosphonium tetra-p-tollylborate, phosphorus-based curing accelerator)
C1-6: 2E4MZ (available from SHIKOKU CHEMICALS CORPORATION, 2-ethyl-4-methylimidazole, general-purpose cationic catalyst)
Catalyst (C2) that generates cation by reaction or light irradiation C2-1: DDA5 (dicyandiamide, latent catalyst)
C2-2: WPBG-266 (available from FUJIFILM Wako Pure Chemical Industries, Ltd., 1,2-diisopropyl-3-[bis(dimethylamino) methylene]guanidium 2-(3-benzoylphenyl) propionate, photobase catalyst)
C2-3: WPBG-300 (available from FUJIFILM Wako Pure Chemical Industries, Ltd., 1,2-dicyclohexyl-4,4,5,5-tetramethyldiguadium n-butyltriphenylborate, photobase catalyst)
C2-4: 2-(9-oxoxanthen-2-yl)propionic acid 1,5,7-triazabicyclo[4.4.0]dec-5-ene (photobase catalyst)

### 1-4. Sensitizer

Kayacure DETX-S (available from Nippon Kayaku Co., Ltd., 2,4-diethylthioxanthone)

### 2. Examination of Curing Reactivity

### Preparation of Compositions 1 to 47

Compositions 1 to 47 were prepared by uniformly stirring and mixing materials at blending ratios shown in Tables 1 to 3 with a mass of the epoxy resin of 3 g using a stirring Rentaro (ARE-310) in a stirring mode under the condition of 2000 rpm for 30 seconds.

### Evaluation

For each of the obtained compositions, the curing reactivity was evaluated by the following methods.

### Exothermic peak temperature by DSC

3.0 mg of each of the obtained compositions was placed in an aluminum sample pan and subjected to differential scanning calorimetry (DSC) measurement. Specifically, DSC-60 available from Shimadzu Corporation was used to measure an exothermic peak temperature (thermal curing temperature) observed when measurement was performed under a temperature increasing condition of 20°C/min from room temperature (25°C). Then, evaluation was performed in accordance with the following criteria.
⊚: Exothermic peak temperature in DSC measurement is lower than 199°C (exothermic peak temperature of acid anhydride)
∘: Exothermic peak temperature in DSC measurement is 199°C or higher and lower than 250°C
Δ: Exothermic peak is confirmed in DSC measurement, but exothermic peak temperature is 250°C or higher
X: No exothermic peak is observed in DSC measurement
When the evaluation was ∘ or ⊚, the reactivity was judged to be good.

The evaluation results of Compositions 1 to 13 are shown in Table 1, the evaluation results of Compositions 14 to 29 are shown in Table 2, and the evaluation results of Compositions 30 to 47 are shown in Table 3.
Note that as a cured type (form), a cured form using the active hydrogen compound (B1) is designated as "1", a cured form using the active hydrogen compound (B2) and the cationic catalyst (C1) is designated as "2", and a cured form using the active hydrogen compound (B2) and the catalyst (C2) that generates a cation by reaction or the like is designated as "3".

**[Table 1]**

| Composition No. | | | | | | 1 | 2 | 3 | 4 | 5 | 6 | 7 | 8 | 9 | 10 | 11 | 12 | 13 |
|---|---|---|---|---|---|---|---|---|---|---|---|---|---|---|---|---|---|---|
| Composition | Epoxy resin | (A) Alicyclic epoxy resin | A-1 | | Bifunctional | | 100 | | 100 | | 100 | 100 | 100 | 100 | 100 | 100 | | |
| | | | A-2 | | Bifunctional | | | | | | | | | | | | | |
| | | | A-3 | | Bifunctional | | | | | | | | | | | | | |
| | | | A-4 | | Bifunctional | 100 | | | | 100 | | | | | | | | |
| | | | A-5 | | Bifunctional | | | | | | | | | | | | | |
| | | | A-6 | | Tetrafunctional | | | | | | | | | | | | | |
| | | Aromatic epoxy resin | 835LV | | Bifunctional | | | 100 | | | | | | | | | 100 | 100 |
| | | | JER604 | | Tetrafunctional | | | | | | | | | | | | | |
| | | | JER630 | | Trifunctional | | | | | | | | | | | | | |
| | Curing agent | (B1) Low pKa active hydrogen compound | B1-1 | pKa = 4 to 6.5 | Trifunctional | | | | | | | | | | | | | |
| | | | B1-2 | pKa = 6.52 to 8.2 | Bifunctional | | | | | | | | | | | | | |
| | | | B1-3 | pKa = 9.6 | Bifunctional | | | | | | | | | | | | | |
| | | (B2) High pKa active hydrogen compound | B2-1 | pKa = 10.5 | Tetrafunctional | | | | 80 | 130 | | | | | | | | 63 |
| | | | B2-2 | pKa = 10.5 | Tetrafunctional | | | | | | | | | | | | | |
| | | | B2-3 | pKa = 10.5 | Trifunctional | | | | | | | | | | | | | |
| | | | B2-4 | pKa = 10.5 | Bifunctional | | | | | | | | | | | | | |
| | | | B2-5 | pKa = 28 | Bifunctional | | | | | | | | | | | | | |
| | | Aliphatic amine | | pKa = 36 | Bifunctional | 48 | 29.5 | 25.8 | | | | | | | | | | |
| | Acid anhydride | | | | | | | | | | | | | | | | | |
| | Parts by mass of (B2) active hydrogen compound relative to 100 parts by mass of (A) alicvclic epoxy resin | | | | | - | - | - | - | - | - | - | - | - | - | - | - | - |
| | Curing catalyst | (C2) Latent catalyst | C2-1 | | | | | | | | 1 | | | | | | 40 | 1 |
| | | (C1) Thermal base catalyst | C1-1 | | | | | | | | | 3 | | | | | | |
| | | (C1) Thermal base catalyst | C1-2 | | | | | | | | | | | | | | | |
| | | (C1) Base catalyst | C1-3 | | | | | | | | | | 3 | | | | | |
| | | (C1) Base catalyst | C1-4 | | | | | | | | | | | 3 | | | | |
| | | (C1) Phosphorus-based curing accelerator | C1-5 | | | | | | | | | | | | 3 | | | |
| | | (C2) Photobase catalyst | C2-2 | | | | | | | | | | | | | | | |
| | | (C2) Photobase catalyst | C2-3 | | | | | | | | | | | | | 5 | | |
| | | (C2) Photobase catalyst | C2-4 | | | | | | | | | | | | | | | |
| | | Sensitizer | | | | | | | | | | | | | | 1 | | |
| | | (C1) Imidazole catalyst | C1-6 | | | | | | | | | | | | | | | |
| Physical properties | Curing reactivity | DSC peak temperature (°C) | | | | - | - | 131.2 | - | 271.8 | - | - | - | - | - | - | 202.3 | 157.9 |
| | | Evaluation | | | | × | × | ○ | × | Δ | × | × | × | × | × | × | ○ | ⊚ |
| Corresponding embodiment | | | | | | 2 | 2 | Aromatic epo | 2 | 2 | 3 | 2 | 2 | 2 | 2 | 3 | Aromatic epo | Aromatic epo |
| Notes | | | | | | Comparative Example | Comparative Example | Comparative Example | Comparative Example | Comparative Example | Comparative Example | Comparative Example | Comparative Example | Comparative Example | Comparative Example | Comparative Example | Comparative Example | Comparative Example |

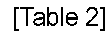

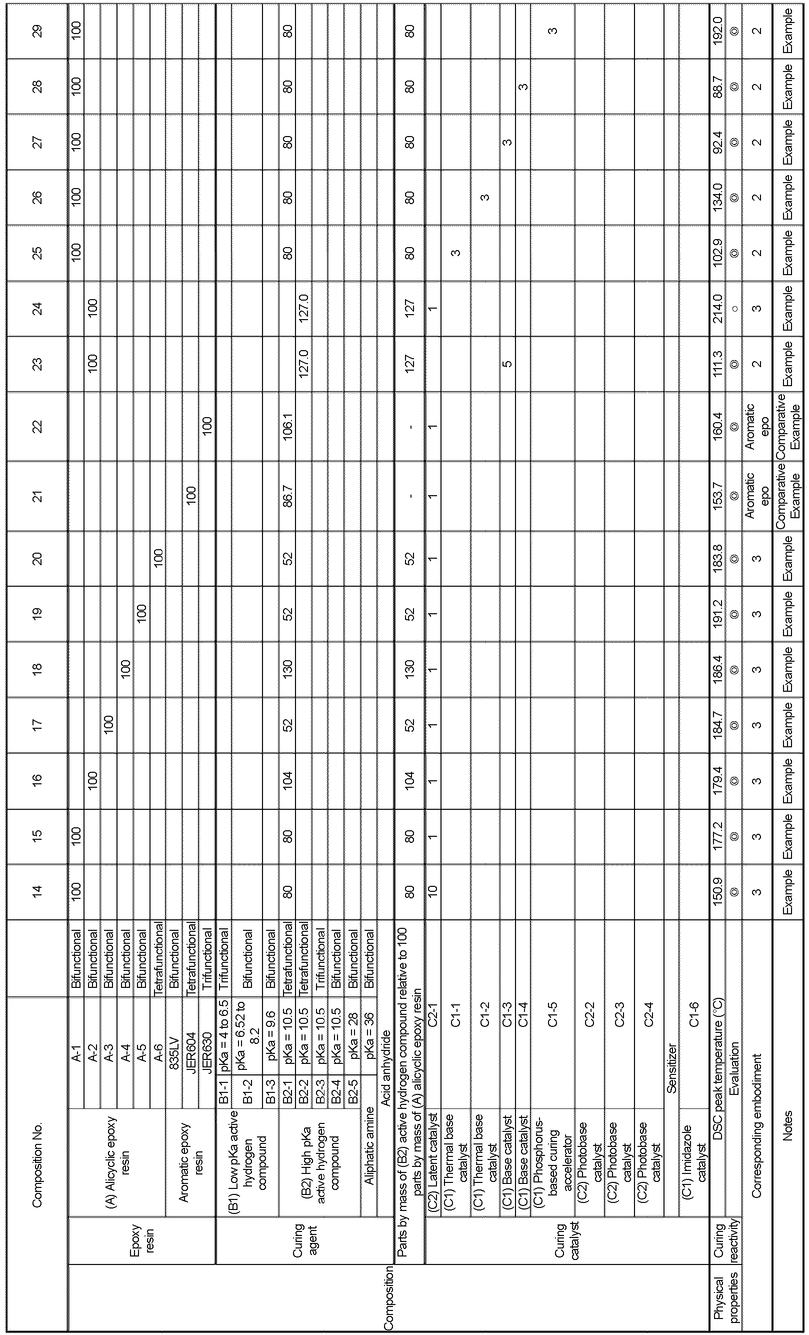

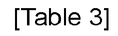

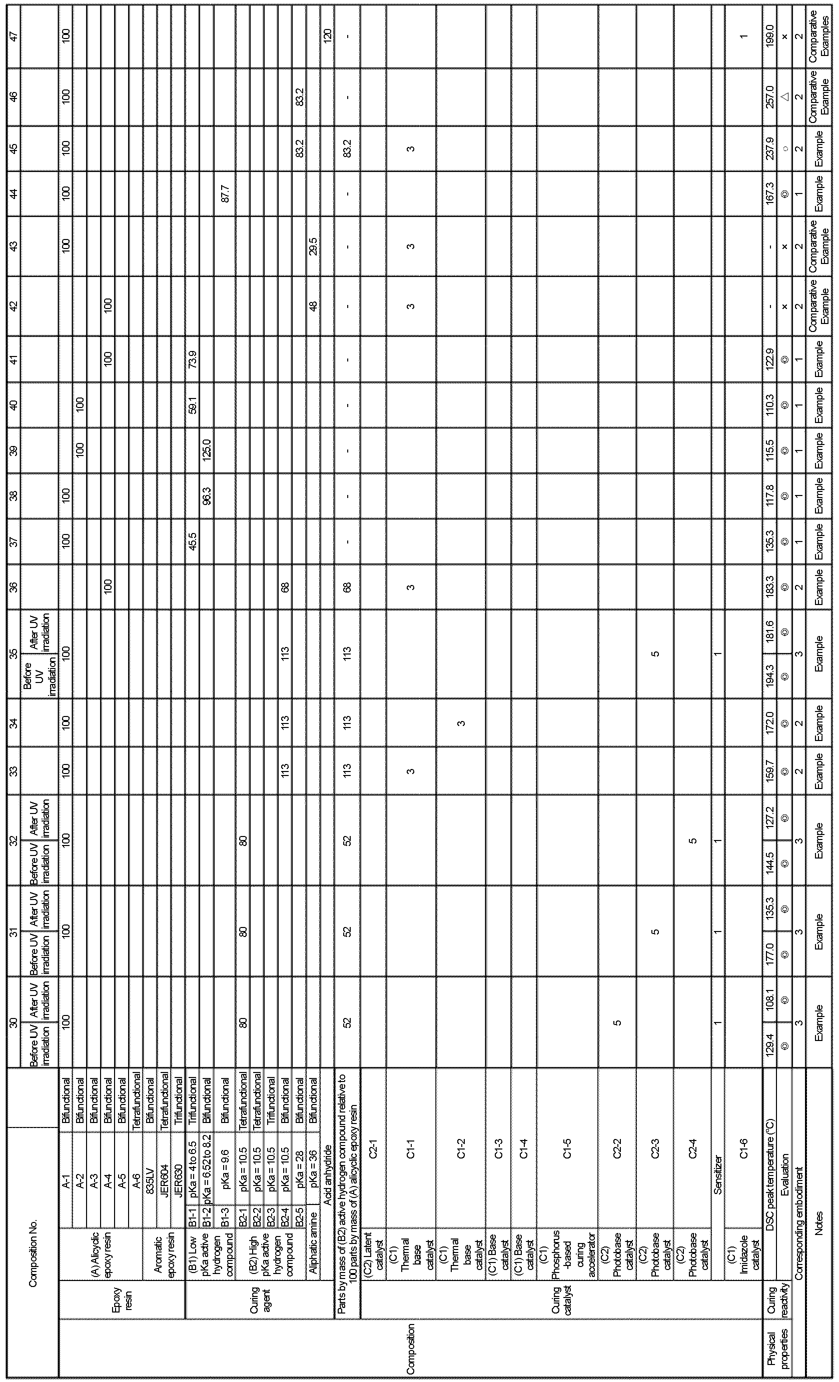

As shown in Tables 1 to 3, it is found that Compositions 37 to 41 and 44 (Examples) containing the active hydrogen compound (B1) having a pKa of 10 or less, Compositions 23, 25 to 29, 33, 34, 36, and 45 (Examples) containing the active hydrogen compound (B2) having a pKa of more than 10 in combination with the cationic catalyst (C1), Compositions 14 to 20 and 24 (Examples) containing the active hydrogen compound (B2) and dicyandiamide, and Compositions 30 to 32 and 35 (Examples) containing the active hydrogen compound (B2) and a photobase catalyst exhibit curing reactivity equivalent to or better than that of the composition containing an acid anhydride-based curing agent (Comparative Example) despite the use of alicyclic epoxy resins. In particular, the compositions other than Compositions 24 and 45 have exothermic peak temperatures lower than the exothermic peak temperature of the acid anhydride, indicating that the curing reactivity is good.

It is found that among them, the aliphatic thiol and the aliphatic amine (active hydrogen compound (B2)) have a high pKa and have low curing reactivity when used alone; however, the aromatic thiol (active hydrogen compound (B1)) having a low pKa exhibits good curing reactivity even when used alone (comparison between Compositions 37 to 41 and Compositions 2 and 4).

In addition, it is found that the aliphatic thiol (active hydrogen compound (B2)) has a high pKa and has low curing reactivity when used alone, but exhibits good curing reactivity when used in combination with the cationic catalyst (C1) (comparison between Compositions 25 to 29 and Composition 4).

Further, it is found that the aliphatic thiol (active hydrogen compound (B2)) has a high pKa and has low curing reactivity when used alone, but exhibits good curing reactivity when used in combination with dicyandiamide (catalyst (C2)) (comparison between Composition 15 and Composition 4). Furthermore, it is found that good curing reactivity is exhibited by the combined use with a photobase catalyst (catalyst (C2)) (comparison between Composition 4 and Compositions 30 to 32 and 35). In particular, it is shown that the exothermic peak temperature after light irradiation is lower than the exothermic peak temperature before light irradiation. These results indicate that the curability is further enhanced by light irradiation (see Compositions 30 to 32 and 35).

### 3. Quantification of Amount of Guanidine

### 3-1. Preparation of composition

### Preparation of Compositions R0 to R5

Materials were uniformly stirred and mixed at a blending ratio shown in Table 4 with a vacuum stirrer Awatori Rentaro ARV-310P at 2000 rpm for 100 seconds and defoamed to prepare a composition.

### Preparation of measurement sample

Compositions 14, 15, R0, R1, and R4 prepared above were heated and cured under the conditions shown in Table 4 to obtain cured product samples. The other compositions were used as samples as they were.

### 3-2. Evaluation

### Pulverization

For each of the cured product samples, a M22 blade was set in a universal pulverizer M20, the cured product pulverized with a hammer was charged thereto in a water-cooled state, the cured product was pulverized for 1 minute, and the pulverized product was placed on a 60-mesh stainless steel net and sieved. The 60-mesh-passed product was collected, the 60-mesh-on product was charged to the M20 again, and the pulverization and sieving operation was repeated until 2 g of the fine powder was obtained.

### Extraction

10 g of water of 5 times the amount of the fine powder was added, and the mixture was heated in a pressure vessel at 120°C for 20 hours, allowed to cool to room temperature, and then filtered with filter paper (5C).

### Ion chromatographic measurement

The obtained extract or sample was weighed in a test tube, diluted with water to a constant volume, dissolved or extracted with ultrasonic waves for 10 minutes, and filtered with a membrane filter. Ion chromatographic measurement was performed for the obtained solution. The measurement conditions were as follows. Measurement conditions
Apparatus: TOSOH IC-2010
Column: Shodex IC YS-50 (125 × 4.6 mm I.D.)
Short column: Shodex IC YS-G (10 × 4.6 mm I.D.)
Suppressor: Non-suppressor
Eluent: 4 mM CH₃SO₃H
Eluent flow rate: 1.0 mL/min
Column temperature: 40°C
Injection volume: 30 µL
Detector: Electrical conductivity (CD)

The measurement results are shown in Table 4.

**[Table 4]**

| | | | 15 | 14 | R0 | R1 | R2 | \| R3 | R4 | R5 |
|---|---|---|---|---|---|---|---|---|---|---|
| Resin | (A1) Alicyclic epoxy resin | A-1 | 100 | 100 | 100 | | | | | |
| Curing agent | (B2) High pKa active hydrogen compound (aliphatic thiol) | B2-1 | 80 | 80 | | | | 100 | 100 | |
| | Acid anhydride | | | | 120 | 100 | 100 | | | |
| Catalyst | (C2) Latent catalyst | C2-1 | 1 | 10 | 1 | 10 | | | 10 | 100 |
| Curing condition | | | 120°C/1 h | | 90°C/3 h → 120°C/4 h | 120°C/1 h | - | - | 120°C/1 h | - |
| Guanidine amount (mass%) | | | 0.021 | 0.119 | 0.003 | - | - | - | 0.188 | 0.008 |
| Notes | | | Example | Example | Reference Example | Reference Example | Reference Example | Reference Example | Reference Example | Reference Example |

As shown in Table 4, guanidine was not detected from Compositions R1 to R3. In addition, only a trace amount of guanidine was detected from the cured product of Composition R0 and Composition R5.
On the other hand, in the cured products of Compositions 14, 15 and R4, a predetermined amount or more of guanidine was detected. From these results, it is found that the aliphatic thiol-based compound (B2-1) and dicyandiamide (C2-1) react with each other to generate guadinine.

### 4. Examination of Refractive Index

### 4-1. Preparation of cured product

### Preparation of cured product 1

Materials were uniformly stirred and mixed with a vacuum stirrer Awatori Rentaro ARV-310P in a blending ratio shown in Table 5 at 2000 rpm for 100 seconds and defoamed to prepare a composition.
The obtained composition was poured into a frame mold, heated at 90°C for 3 hours, and then heated at 120°C for 4 hours to be cured, thereby obtaining a cured product 1 having a thickness of 3 mm.

### Preparation of cured products 2 and 3

Materials were uniformly stirred and mixed with a vacuum stirrer Awatori Rentaro ARV-310P in a blending ratio shown in Table 5 at 2000 rpm for 100 seconds and defoamed to prepare a composition.
The obtained composition was poured into a frame mold and cured by heating at 120°C for 1 hour to obtain each of cured products 2 and 3 having a thickness of 3 mm.

### Preparation of cured product 4

Composition 23 prepared above was poured into a frame mold and cured by heating at 60°C for 1 hour to obtain a cured product 4.

### Preparation of cured product 5

Composition 24 prepared above was poured into a frame mold and cured by heating at 130°C for 1 hour to obtain a cured product 5 having a thickness of 3 mm.

### Preparation of cured products 6 and 7

Materials were uniformly stirred and mixed with a vacuum stirrer Awatori Rentaro ARV-310P in a blending ratio shown in Table 5 at 2000 rpm for 100 seconds and defoamed to prepare a composition.
The obtained composition was poured into a frame mold and cured by heating at 100°C for 1 hour to obtain each of cured products 6 and 7 having a thickness of 3 mm.

### 4-2. Evaluation

The refractive indices of the cured products 1 to 7 prepared above were evaluated by the following method.

### Refractive index

The refractive indices of the cured products were measured using an Abbe Refractometer DR-A1-Plus under a condition of wavelength of 589 nm. Monobromonaphthalene was used as an intermediate liquid.

The measurement results are shown in Table 5.

**[Table 5]**

| Cured product No. | | | | 1 | 2 | 3 | 4 | 5 | 6 | 7 |
|---|---|---|---|---|---|---|---|---|---|---|
| Composition | Composition No. | | | 47 | 15 | 16 | 23 | 24 | 38 | 39 |
| | Resin | (A) Alicyclic epoxy resin | A-1 | 100 | 100 | | | | 100 | |
| | | | A-2 | | | 100 | 100 | 100 | | 100 |
| | | 835LV | | | | | | | | |
| | Curing agent | (B1) Low pKa active hydrogen compound (aromatic thiol) | B1-2 | | | | | | 96.3 | 125.0 |
| | | (B2) High pKa active hydrogen compound (aliphatic thiol) | B2-1 | | 80 | 104 | | | | |
| | | | B2-2 | | | | 127.0 | 127.0 | | |
| | | Acid anhydride | | 120 | | | | | | |
| | Catalyst | (C2) Latent catalyst | C2-1 | | 1 | 1 | | 1 | | |
| | | (C1) Base catalyst | C1-3 | | | | 5 | | | |
| | | (C1) Imidazole catalyst | C1-6 | 1 | | | | | | |
| Physical properties | Refractive index | | | 1.51 | 1.57 | 1.59 | 1.56 | 1.56 | 1.62 | 1.66 |
| Corresponding embodiment | | | | 2 | 3 | 3 | 2 | 3 | 1 | 1 |
| Notes | | | | Comparative Example | Example | Example | Example | Example | Example | Example |

As shown in Table 5, it is found that the cured products 6 and 7 (Examples) of the compositions containing the active hydrogen compound (B1) having a pKa of 10 or less, the cured product 4 (Example) of the composition containing the active hydrogen compound (B2) having a pKa of more than 10 in combination with the cationic catalyst, and the cured products 2, 3, and 5 (Examples) of the compositions containing the active hydrogen compound and dicyandiamide all have higher refractive indices than that of the cured product 1 (Comparative Example) of the composition containing the acid anhydride-based curing agent.

### 5. Examination of Bending Characteristics

### 5-1. Preparation of cured product

### Preparation of cured products 1 to 5

The cured products 1 to 5 prepared above were prepared.

### Preparation of cured products 8 to 10

Materials were uniformly stirred and mixed in a blending ratio shown in Table 6 with a vacuum stirrer Awatori Rentaro ARV-310P at 2000 rpm for 100 seconds and defoamed to prepare a composition.
The obtained composition was poured into a frame mold, heated at 100°C for 0.5 hours, and then further heated at 120°C for 0.5 hours to be cured, thereby obtaining each of cured products 8 to 10 having thickness of 3 mm.

### 5-2. Evaluation

The bending characteristics of the cured products 1 to 5 and 8 to 10 prepared above were evaluated by the following method.

### Bending modulus of elasticity and flexural strength

The obtained cured product was cut into a size of 80 mm × 10 mm to obtain a test piece. Using this test piece, the bending modulus of elasticity, flexural strength, and strain rate were determined by a method in accordance with JIS K 7171.

### Strain rate and yield point

Presence or absence of the yield point of the test piece was determined from presence or absence of a point where the stress does not increase and the strain increases in the stress-strain curve.

The measurement results are shown in Table 6.

**[Table 6]**

| Cured product No. | | | | 1 | 8 | 9 | 10 | 2 | 3 | 4 | 5 |
|---|---|---|---|---|---|---|---|---|---|---|---|
| Composition | Composition No. | | | 47 | 13 | 21 | 22 | 15 | 16 | 23 | 24 |
| | Resin | (A) Alicyclic epoxy resin | A-1 | 100 | | | | 100 | | | |
| | | | A-2 | | | | | | 100 | 100 | 100 |
| | | 835LV | | | 100 | | | | | | |
| | | JER604 | | | | 100 | | | | | |
| | | JER630 | | | | | 100 | | | | |
| | Curing agent | (B2) High pKa active hydrogen compound (aliphatic thiol) | B2-1 | | 63 | 86.7 | 106.1 | 80 | 104 | | |
| | | | B2-2 | | | | | | | 127.0 | 127.0 |
| | | | B2-3 | | | | | | | | |
| | | Acid anhydride | | 120 | | | | | | | |
| | Catalyst | (C2) Latent catalyst | C2-1 | | 1 | 1 | 1 | 1 | 1 | | 1 |
| | | (C1) Base catalyst | C1-3 | | | | | | | 5 | |
| | | (C1) Imidazole catalyst | C1-6 | 1 | | | | | | | |
| Evaluation | Curing reactivity | DSC peak temperature (°C) | | 199.8 | 157.9 | 153.7 | 160.4 | 177.2 | 179.4 | 111.3 | 214.0 |
| | Bending characteristics | Modulus of elasticity (N/mm²) | | 3120 | 2570 | 2870 | 2740 | 3310 | 3410 | 3220 | 3220 |
| | | Flexural strength (N/mm²) | | 113 | 110 | 119 | 108 | 137 | 160 | 113 | 119 |
| | | Strain rate (%) | | 3.7 | 7.3 | 5.8 | 6.4 | 8.2 | 8.5 | 5.3 | 5.6 |
| | | Yield point | | × | ○ | × | × | ○ | ○ | ○ | ○ |
| Corresponding embodiment | | | | 2 | 3 | 3 | 3 | 3 | 3 | 2 | 3 |
| Notes | | | | Comparative Example | Comparative Example | Comparative Example | Comparative Example | Example | Example | Example | Example |

As shown in Table 6, it is found that the cured product 4 (Example) of the composition containing the active hydrogen compound having a pKa of more than 10 and the cationic catalyst in combination, and the cured products 2, 3, and 5 (Examples) of the compositions containing the active hydrogen compound and dicyandiamide have higher flexural strength, bending modulus of elasticity, strain rate and yield point than those of the cured product 1 (Comparative Example) of the composition containing the acid anhydride-based curing agent. In addition, it is found that the cured products 2 to 5 (Examples) are higher in both bending modulus of elasticity and strain rate than the cured products 9 and 10 (Comparative Examples) using the aromatic epoxy resin.

### 6. Examination of Thermoplasticity

### 6-1. Preparation of Compositions 2-1 to 2-11

Components shown in Table 7 were blended at blending ratios shown in the same table and mixed under the following mixing condition 1 or 2.

### Mixing condition 1

Using a vacuum stirrer Awatori Rentaro (ARV-310P), the mixture was uniformly stirred and mixed at 2000 rpm for 100 seconds, and defoamed to prepare a composition.

### Mixing condition 2

Using a vacuum stirrer Awatori Rentaro (ARE-310), the mixture was uniformly stirred and mixed at 2000 rpm for 30 seconds in a stirring mode to prepare a composition.
Note that Compositions 2-2, 2-3, 2-5, 2-6, 2-8, and 2-9 correspond to the above-described Compositions 34, 35, 38, 39, 44, and 47, respectively.

### 6-2. Evaluation

The following evaluations were performed for the obtained compositions.

### 6-2-1. Viscosity of composition

The viscosity (value at 25°C, 5 rpm, 30 sec.) of each composition prepared under the condition of the mixing condition 1 was measured with a cone plate type viscosimeter (TVE-35H, cone rotor: 3° × R9.7, available from Toki Sangyo Co., Ltd.).

### 6-2-2. Evaluation of cured product

For the cured product of each composition prepared under the condition of the mixing condition 2, the thermoplasticity and the self-repairing property (appearance, bending test) were evaluated by the following methods. The cured product of Composition 2-6 was further subjected to TOF-MS analysis.

### (1) Thermoplasticity

The obtained composition was poured into a frame mold in which a silicon rubber having a thickness of 1 mm was sandwiched between two glass slides (available from Matsunami Glass Ind., Ltd., Matsunami glass slide type S7214), and heated and cured under the curing conditions shown in the table to obtain a cured product having a thickness of 1 mm. Note that regarding the curing condition 2 of the composition 2-3, the composition 2-3 was poured into a frame mold, irradiated using a high-pressure mercury lamp UV irradiator (available from EYE GRAPHICS COMPANY, (trade name) ECS-4011GX) at a dose of 9000 mJ, and then heated at 120°C for 1 hour to obtain a cured product having a thickness of 1 mm.

The obtained cured product was placed in an oven heated to 120°C in a state of standing with clips, heated at 120°C for 1 hour, and then the state of the standing cured product was visually observed to evaluate the thermoplasticity. Then, evaluation was performed in accordance with the following criteria.
4: The cured product does not maintain the shape of the form and exhibits thermoplasticity
3: The cured product can be removed from the frame mold while maintaining the shape of the form, but when the cured product is left standing for a certain period of time before heating at 120°C for 1 hour, the cured product is collapsed (although curing is not sufficient, thermoplasticity is exhibited)
2: Thickened but unremovable from the frame mold (not cured)
1: The standing state is maintained and thermoplasticity is not exhibited

### (2) Self-repairing property - Appearance

The cured product obtained in the same manner as in (1) above was placed in a freezer at -30°C from each curing temperature while being held between the glass slides, and cracked. In a case where no crack was formed, the glass slides were bent to such an extent that the glass slides were not broken to form a crack. Then, the cracked cured product at room temperature was heated at 120°C for 5 minutes, and then the state of the crack was visually observed. Evaluation was performed based on the following criteria.
3: Crack disappeared
2: No crack is generated even by bending
1: Remained hard and crack did not disappear

### (3) Self-repairing property - Bending test

### Preparation of evaluation sample

100 parts by mass of Celloxide 2021P (Daicel), 80 parts by mass of TS-G (SHIKOKU CHEMICALS CORPORATION), and 1 part by mass of DDA5 were kneaded using a vacuum stirrer Awatori Rentaro (ARV-310P) in a stirring mode at 2000 rpm for 180 seconds and defoamed to prepare Composition A. The obtained Composition A was poured into a form and heated at 120°C for 1 hour to obtain two cured products each having thickness of 1 mm.
On the other hand, materials were kneaded in a blending ratio of Composition 2-6 or 2-8 using a vacuum stirrer Awatori Rentaro (ARV-310P) in a stirring mode at 2000 rpm for 100 seconds and defoamed to prepare Composition B. Then, Composition B prepared above was poured between the two cured products prepared above and heated under the respective conditions shown in Table 7. In this manner, a cured product having a total thickness of 3 mm of a three layer structure (cured product A (for outer wall)/cured product B (evaluation target)/cured product A (for outer wall)) was obtained.

### Bending test

The obtained cured product was subjected to a bending test in accordance with JIS K 6911. That is, the cured product having a thickness of 3 mm was cut into a size of 80 × 10 mm to obtain a test piece. Using this test piece, the bending modulus of elasticity was measured by a three-point bending test in accordance with JIS K 6911, with the inter-fulcrum distance set to 50 mm and the test speed set to 1.5 mm/min. The bending modulus of elasticity was calculated from the following calculation formula. Modulus of elasticity (N/mm2) = inclination × inter-fulcrum distance/cross-sectional area of test piece The slope was calculated by the least square method using all data between two points of test forces 10 N and 20 N, with the vertical axis representing a test force and the horizontal axis representing a displacement.

After the cured product was cut into the size for the bending test, a cellophane tape was attached only to four side surfaces of the thickness side of the test piece to prevent the inner layer structure from slipping off due to an impact during the test.

The test was performed in the following order of 1 to 9. After heating, the test was conducted after cooling at room temperature for 1 hour.
1. Initial heating: Put into oven heated to 120°C for 10 minutes (to repair cracks generated when cut into a test piece size)
2. Initial measurement: Bending test
3. Measurement at break: Bending test
4. 120°C repair: Put into oven heated to 120°C for 10 minutes
5. 120°C - measurement of modulus of elasticity: Bending test
6. 100°C repair: Put into oven heated to 100°C for 10 minutes
7. 100°C measurement: Bending test
8. 140°C repair: Put into oven heated to 140°C for 10 minutes
9. 140°C measurement: Bending test

The repair rate (%) at each temperature was evaluated based on the following equation. Repair rate (%) = (measured value at each temperature - measured value at break)/(initial measured value - measured value at break) × 100

Note that the measured value means a bending modulus of elasticity measured by the bending test.

In a case where the repair rate was positive, it was indicated that the self-repairing property was exhibited, and the temperature at which the repair rate became positive was defined as the temperature at which the self-repairing property was possible. Note that in a case where the repair rate was negative, it was defined as 0%, which indicated that the self-repairing property was not exhibited.

### (4) TOF-MS analysis

The cured product of Composition 2-6 was subjected to structural analysis by TOF-MS analysis.

To be specific, 10 mg of the cured product was weighed, 5 mL of chloroform was added thereto, and ultrasonic treatment was performed for 10 minutes. 1 µL of the sample solution was applied to an FD emitter, and measurement was performed using JMS-T100GCV available from JEOL Ltd. under the following conditions.
Sample: diluted with chloroform
Ionization mode: FD+
Analysis m/z range: 29.00 to 3000.00

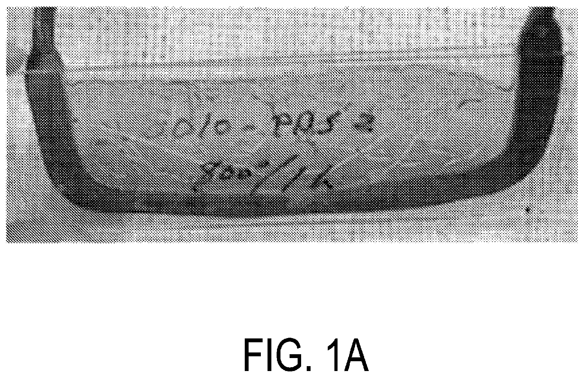

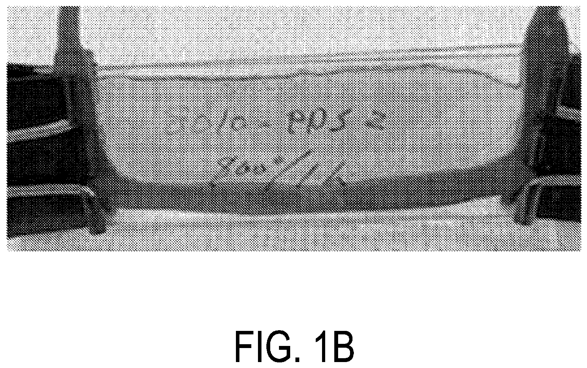

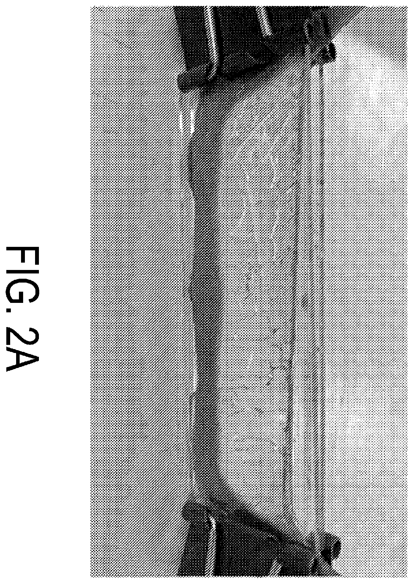

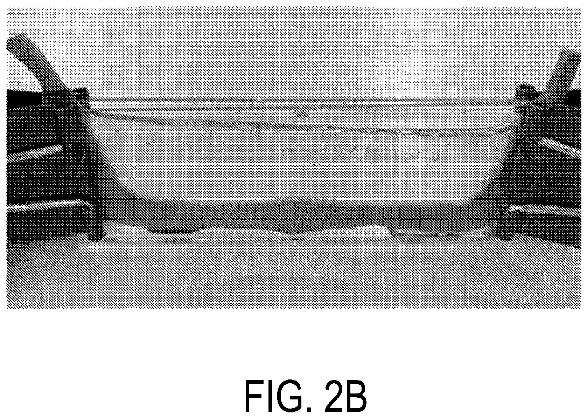

The evaluation results of Compositions 2-1 to 2-11 are shown in Table 7. Among them, the appearance of the cured product obtained from Composition 2-6 before heating is shown in FIG. 1A and the appearance thereof after heating is shown in FIG. 1B. The appearance of the cured product obtained from Composition 2-7 before heating is shown in FIG. 2A and the appearance thereof after heating is shown in FIG. 2B.

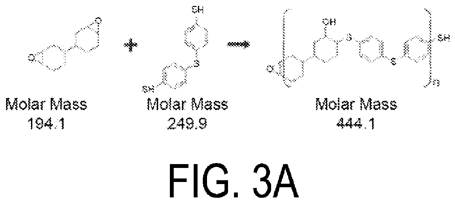

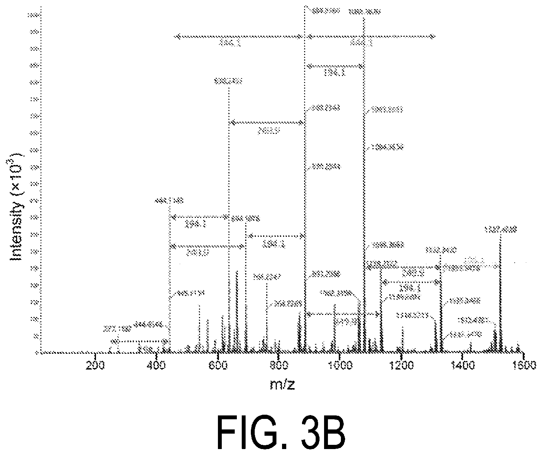

The reaction mechanism of Composition 2-6 is shown in FIG. 3A, and the TOF-MS spectrum of the cured product thereof is shown in FIG. 3B. The evaluation results of (3) Self-repairing property - Bending test of Compositions 2-6 and 2-8 are shown in Table 8.

Note that in Table 7, as the cured type (form), the cured form using the active hydrogen compound (B1) is designated as "1", the cured form using the active hydrogen compound (B2) and the cationic catalyst (C1) is designated as "2", and the cured form using the active hydrogen compound (B2) and the catalyst (C2) that generates a cation by reaction or the like is designated as "3".

**[Table 7]**

| Composition No. | | | | | 2-1 | 2-2 | 2-3 | | 2-4 | 2-5 | 2-6 | 2-7 | 2-8 | 2-9 | 2-10 | 2-11 |
|---|---|---|---|---|---|---|---|---|---|---|---|---|---|---|---|---|
| Composition | Epoxy resin | (A') Bifunctional alicyclic epoxy resin | A-1 | | 100 | 100 | 100 | 100 | | 100 | | 100 | 100 | 100 | | |
| | | | A-2 | | | | | | | | 100 | | | | | |
| | | | A-3 | | | | | | 100 | | | | | | | |
| | | Aromatic epoxy resin | 850S | | | | | | | | | | | | 100 | 100 |
| | Curing agent | (B1') Low pKa bifunctional active hydrogen compound | B1-2 | pKa = 6.52 to 8.2 | | | | | | 96.3 | 125.0 | | | | | |
| | | | B1-3 | pKa = 9.6 | | | | | | | | | 87.7 | | 60.3 | |
| | | (B2') High pKa bifunctional active hydrogen compound | B2-4 | pKa = 10.5 | 113 | 113 | 113 | 113 | 68 | | | | | | | |
| | | | B2-5 | pKa = 28 | | | | | | | | 83.2 | | | | 57.2 |
| | | Acid anhydride | | | | | | | | | | | | 120 | | |
| | Curing catalyst | (C2) Latent catalyst | C2-1 | | 3 | | | | 3 | | | | | | | 1 |
| | | (C2) Photobase catalyst | C2-3 | | | | 5 | 5 | | | | | | | | |
| | | Sensitizer | | | | | 1 | 1 | | | | | | | | |
| | | (C1) Thermal base catalyst | C1-2 | | | 3 | | | | | | 1 | | | | |
| | | (C1) Imidazole catalyst | C1-6 | | | | | | | | | | | 1 | | |
| | Cured type (form) | | | | 3 | 2 | 3 | 3 | 3 | 1 | 1 | 2 | 1 | - | - | - |
| Viscosity [Pa•s] | | | | | 0.1 | 0.1 | 0.1 | 0.1 | 0 | 7.9 | 11 | 4.4 | 36.8 | 0.1 | 181.7 | 62.7 |
| Curing condition | | | | | 150°C/1 h | 150°C/1 h | 120°C/1 h (Condition 1) | 9000 mJ → 120°C/1 h (Condition 2) | 150°C/1 h | 100°C/1 h | 100°C/1 h | 150°C/1 h | 150°C/1.5 h | 90°C/3 h → 120°C/4 h | 150°C/1.5 h | 150°C/0.5 h |
| Evaluation | (1) Thermoplasticity (change after 120°C/1 h) | | | | 4 | 4 | - | 4 | 4 | 4 | 4 | 4 | 3 | 1 | 2 | 1 |
| | (2) Self-repairing property -Appearance (presence or absence of crack after 120°C/5 min) | | | | 2 | 2 | - | 2 | 2 | 3 | 3 | 3 | 2 | 1 | 2 | 1 |
| Notes | | | | | Example | Example | Example | | Example | Example | Example | Example | Example | Comparative Example | Comparative Example | Comparative Example |

**[Table 8]**

| Composition No. | | | 2-6 | 2-8 |
|---|---|---|---|---|
| (3) Self-repairing property - Bending test | Modulus of elasticity [ N/mm²] | Initial value | 3160 | 2850 |
| | | Breakdown state | 1180 | 881 |
| | Repairing rate [%] | 120°C/10 min | 31% | 101% |
| | | 100°C/10 min | 0% | 19% |
| | | 140°C/10 min | 95% | 106% |

As shown in Table 7, the cured products of Compositions 2-9 and 2-11 were not softened even when heated at 120°C for 1 hour, and it is found that thermoplasticity is not exhibited. In addition, the cured products after heating at 120°C for 5 minutes were not softened but remained hard, and cracks did not disappear. Thus, it is found that there is no self-repairing property.

On the other hand, the cured products of Compositions 2-1 to 2-8 were softened when heated at 120°C for 1 hour, and it is found that thermoplasticity is exhibited. In addition, the cured products after heating at 120°C for 5 minutes were soft, and cracks disappeared. Thus, it is found that the cured products have the self-repairing property (see Table 7). Further, it is also found that Compositions 2-6 and 2-8 were improved in the repair rate particularly at 120°C and 140°C and exhibit the good self-repairing property (see Table 8).

As described above, in the curing system containing an acid anhydride, an epoxy group of an alicyclic epoxy resin reacts with an active hydrogen compound and then undergoes ring opening to become an oxygen anion (-O-). Thus, the epoxy group reacts with (not only an active hydrogen compound but also) another alicyclic epoxy resin and is likely to be three-dimensionally crosslinked. In contrast, in the present invention, the epoxy group of the alicyclic epoxy resin reacts with the active hydrogen compound and then becomes -OH by a cation (H+ in this case), and thus does not react with another alicyclic epoxy resin but reacts only with the active hydrogen compound. Accordingly, the difference between the structure of the normal reaction and the structure of the present invention is that the oxygen derived from the epoxy group is -O- or -OH, and thus the difference is a weight of one H atom. Therefore, in a case of the reaction with -O-, the weight corresponding to one H atom is subtracted from the molecular weight of the epoxy resin + active hydrogen compound, but in a case of the reaction with -OH, the molecular weight of the epoxy resin + active hydrogen compound is maintained and a molecular weight is increased. The molecular weight of the epoxy resin + active hydrogen compound in the formulation of Compositions 2-6 is 444.1 as shown in FIG. 3A. In the TOF-MS spectrum of Example 6 shown in FIG. 3B, molecular weights can be identified in the unit of 444.1 which is a molecular weight including -OH at 444.1143, 888.2360, and 1332.3430 as main peaks. In addition, it is found that a peak derived from A-2 (molecular weight 194.1) which is the alicyclic epoxy resin (A) and a peak derived from B1-1 (molecular weight 249.9) which is the active hydrogen compound (B1) alternately appear (see FIG. 3). That is, a repeating structure (molecular weight 444.1) in which the alicyclic epoxy resin (A), the thiol compound (B1), ··· are bonded in this order is detected. From these results, it is found that the expected reaction occurs, that is, the alicyclic epoxy resin and the thiol-based compound are linearly polymerized.

### 7. Examination of Kneadability

### (1) Preparation of sample sheet

14.25 g of PP (MA3) (Novatec PP available from Japan Polypropylene Corporation, general injection-molding grade, polypropylene resin) and 0.75 g of the cured product of Composition 2-6 (thermoplastic resin) were melt-mixed at 180°C for 10 minutes using a kneading apparatus Labo Plastomill [roller mixer R30] (available from Toyo Seiki Seisaku-sho, Ltd.), and then press-molded at 180°C to obtain a sample sheet having a thickness of 0.31 mm.

### (2) Evaluation method

A part of the obtained sample sheet was cut into a strip shape with a razor blade. After pre-cracking in the middle, it was cleaved in liquid nitrogen. This was arranged on a sample stage to which a carbon tape was attached in such a manner that the observation surface faced upward, and metal vapor deposition was performed with Os.

Then, the metal-deposited surface of the sample sheet was subjected to SEM observation, EDS analysis, and image analysis. Image analysis was performed on three fields of view using S mapping images of 3k of the sample. Note that in Table 9, the area, major axis, and average distance between neighboring particles of spherical particles are the maximum value (Max), the minimum value (Min), the intermediate value (Med), the standard deviation (S.D.), and the average value (Ave) of 123 spherical particles.

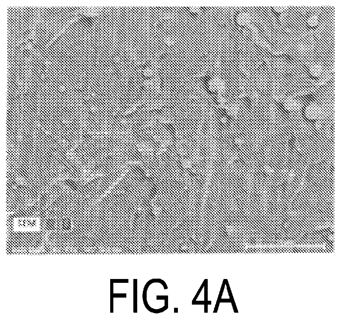

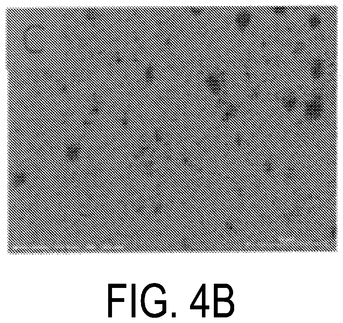

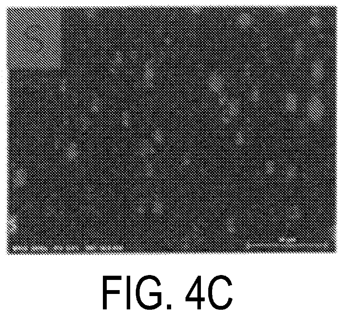

The SEM observation result of the sample sheet surface of Composition 2-6 is shown in FIG. 4A, and the EDX analytical results thereof are shown in FIGS. 4B and 4C. The image analysis results are shown in Table 9. FIG. 4B is a mapping image in which a portion (continuous phase) in which a carbon element (C) is detected is displayed in gray, and FIG. 4C is a mapping image in which a portion (dispersed phase) in which a sulfur element (S) is detected is displayed in gray.

**[Table 9]**

| | Image analysis results | | |
|---|---|---|---|
| | Area (µm²) | Major axis (µm) | Average neighbor distance (µm) |
| Count (pieces) | 123 | | |
| Ave. | 0.67 | 0.83 | 5.75 |
| Max. | 3.6 | 3.08 | 15.13 |
| Min. | 0.04 | 0.11 | 2.24 |
| Med. | 0.48 | 0.75 | 5.44 |
| S.D. | 0.72 | 0.53 | 1.98 |

As shown in the results of EDS analysis (FIGS. 4B and 4C), it was observed that spherical particles (dispersed phase) derived from the cured product of the composition (thermoplastic resin) and containing a sulfur element (S) were well dispersed in the continuous phase of PP which is a matrix resin. The size of the spherical particles was about several 100 nm to 2 µm.

In addition, as shown in Table 9, it is found that the spherical particles of the thermoplastic resin have a small area, a small major axis, and a small average distance between neighboring particles, and are well dispersed. From these results, it is found that the thermoplastic resin obtained by curing the curable composition containing the bifunctional epoxy resin (A') and the bifunctional active hydrogen compound (B') is well dispersed in the matrix resin and is suitable as a master batch.

The present application claims priority from the Japanese Patent Application No. 2022-138414 filed on August 31, 2022 and the Japanese Patent Application No. 2022-138424 filed on August 31, 2022. The contents described in the specifications and drawings of these priority applications are all incorporated in the specification of the present application by reference.

### INDUSTRIAL APPLICABILITY

According to the present invention, it is possible to provide a curable composition which exhibits good curing reactivity even when it contains a large amount of an alicyclic epoxy resin.

## Claims

1. A curable composition comprising:
an alicyclic epoxy resin (A); and an active hydrogen compound (B1) having a pKa of 10 or less.

2. The curable composition according to claim 1, wherein the active hydrogen compound (B1) comprises an aromatic thiol-based compound.

3. The curable composition according to claim 1, wherein
the alicyclic epoxy resin (A) is a bifunctional alicyclic epoxy resin (A'), and
the active hydrogen compound (B1) having a pKa of 10 or less is a bifunctional active hydrogen compound (B1') having a pKa of 10 or less.

4. A curable composition comprising: an alicyclic epoxy resin (A); an active hydrogen compound (B2) having a pKa of more than 10; and a cationic catalyst (C1), wherein
a content ratio of the active hydrogen compound (B2) relative to 100 parts by mass of the alicyclic epoxy resin (A) is from 40 to 200 in mass ratio.

5. The curable composition according to claim 4, wherein the active hydrogen compound (B2) comprises an aliphatic thiol-based compound.

6. A curable composition comprising: a bifunctional alicyclic epoxy resin (A'); a bifunctional active hydrogen compound (B2') having a pKa of more than 10; and a cationic catalyst (C1).

7. A curable composition comprising: an alicyclic epoxy resin (A); an active hydrogen compound (B2) having a pKa of more than 10; and a catalyst (C2) that generates a cation by reaction with the active hydrogen compound (B2) or light irradiation.

8. The curable composition according to claim 7, wherein the active hydrogen compound (B2) comprises an aliphatic thiol-based compound.

9. The curable composition according to claim 7, wherein
the catalyst (C2) is a catalyst that generates a cation by reaction with the active hydrogen compound (B2), and
the curable composition includes dicyandiamide.

10. The curable composition according to claim 7, wherein
the alicyclic epoxy resin (A) is a bifunctional alicyclic epoxy resin (A'), and
the active hydrogen compound (B2) having a pKa of more than 10 is a bifunctional active hydrogen compound (B2') having a pKa of more than 10.

11. A cured product of the curable composition described in claim 1.

12. A cured product of the curable composition described in claim 4.

13. A cured product of the curable composition described in claim 7.

14. A method for producing a cured product, the method comprising:
reacting an active hydrogen compound (B2) with dicyandiamide under heating to obtain a composition containing guanidine; and
reacting the composition with an alicyclic epoxy resin (A) under heating to obtain a cured product of a curable composition containing the alicyclic epoxy resin (A).

15. A thermoplastic resin comprising: a structural unit derived from a bifunctional alicyclic epoxy resin (A'); and a structural unit derived from a bifunctional active hydrogen compound (B').
